# EUROPEAN PATENT SPECIFICATION

(11) **EP 3 276 487 B1**
(45) Date of publication and mention of the grant of the patent: **14.07.2021**
(21) Application number: 17182424.6
(22) Date of filing: 20.07.2017
(51) Int. Cl.: G06F 9/451, G06F 16/174, G06F 16/30, G06F 16/583, G06K 9/62

(54) **METHOD OF DETECTING SIMILAR APPLICATIONS AND ELECTRONIC DEVICE ADAPTED TO THE SAME**
VERFAHREN ZUR DETEKTION VON ÄHNLICHEN ANWENDUNGEN UND DARAN ANGEPASSTE ELEKTRONISCHE VORRICHTUNG
PROCÉDÉ DE DÉTECTION D'APPLICATIONS SIMILAIRES ET DISPOSITIF ÉLECTRONIQUE ADAPTÉ À CELUI-CI

(30) Priority: 28.07.2016 KR 20160096413
(43) Date of publication of application: 31.01.2018
(73) Proprietor: Samsung Electronics Co., Ltd., Gyeonggi-do 16677 (KR)
(72) Inventor: Seo, Youngjoon, 16677 Suwon-si (KR); Yu, Seungmin, 16677 Suwon-si (KR); Jung, Minwoo, 16677 Suwon-si (KR)
(74) Representative: Nederlandsch Octrooibureau

(56) References cited:
- EP-A1- 2 530 922
- CN-A- 103 345 516
- US-A1- 2014 282 493
- US-A1- 2016 173 591
- US-B1- 9 197 663

## Description

### BACKGROUND

### 1. Field of the Disclosure

The present disclosure relates to a method and an electronic device for detecting similar applications, and more particularly, to a method of detecting identical or similar applications implemented on a certain operating system (OS), and an electronic device adapted to the method.

### 2. Description of the Related Art

An OS is one of the primary factors used to identify a device. In recent years, electronic devices capable of processing various tasks, which can thus be carried out by a small computer, have been developed. Examples of electronic devices include smartphones, smart pads, etc. Accordingly, OSs for managing electronic devices have increased in variety.

In addition, various OSs operate independent online markets, and distribute applications via the markets. Therefore, if an application is supported by various OSs, it must change its format to meet the corresponding platforms of the OSs, and to be distributed via individual independent online markets according to OSs.

Although methods of detecting similar applications on identical OSs have been developed, a method capable of detecting similar applications on different OSs was not previously developed. For example, in order to detect similar applications on identical OSs, a classification method using a package name, a file difference method for files, a comparison method using a hash function, etc., have been developed.

The methods are only techniques to analyze a type of code used on a certain OS, thus, they cannot be used on different OSs.

EP 2 530 922 A1 discloses a mobile terminal and a method of controlling the mobile terminal are disclosed, wherein, in the mobile terminal, at least one second application executable in a second operating system different from a first operating system can be searched and provided among at least one first application executable in the first operating system.

US 2014/0282493 A1 discloses a method to recreate an application ("app") experience on a first device on a second device, including: identifying one or more existing apps on the first device; generating a query for one or more apps matching the existing apps; sending the query to an application search engine through an application programming interface (API); searching an application search engine for one or more matching applications; and returning a set of matching apps in response to the query using the API.

CN 1030345 516 A discloses a method and system for searching an application based on application icon comparison, wherein a received application icon is compared to an application icon stored in a server's application icon database to determine a candidate application icon that is similar to the received application icon.

### SUMMARY

An aspect of the present disclosure is to detect whether identical or similar applications exist on different OSs.

Another aspect of the present disclosure is to detect whether similar applications exist on identical OSs.

In accordance with an aspect of the present disclosure, a method of detecting similar applications is provided, according to claim 1.

In accordance with another aspect of the present disclosure, an electronic device is provided, according to claim 7.

### BRIEF DESCRIPTION OF THE DRAWINGS

The above and other aspects, features and advantages of the present disclosure will be more apparent from the following detailed description, taken in conjunction with the accompanying drawings, in which:
FIG. 1 is a block diagram of a network environment including an electronic device according to an embodiment of the present disclosure;
FIG. 2 is a block diagram of an electronic device according to an embodiment of the present disclosure;
FIG. 3 is a block diagram of a program module according to an embodiment of the present disclosure;
FIG. 4 is a block diagram of a processor according to an embodiment of the present disclosure;
FIG. 5 is a flowchart of a method of detecting similar applications according to an embodiment of the present disclosure;
FIG. 6 is a flowchart of a method of searching whether similar applications exist according to an embodiment of the present disclosure;
FIG. 7 is a flowchart of a method of analyzing similarity between unique identifications (IDs) according to an embodiment of the present disclosure;
FIG. 8 is a flowchart of a method of analyzing similarity between icon images according to an embodiment of the present disclosure;
FIGs. 9A, 9B, and 9C are diagrams that illustrate standardization of icon images according to an embodiment of the present disclosure;
FIGs. 10A, 10B, and 10C are diagrams that illustrate a method of analyzing similarity between icon images according to an embodiment of the present disclosure;
FIG. 11 is a flowchart of a method of analyzing similarity between pieces of information regarding strings according to an embodiment of the present disclosure; and
FIGs. 12A, 12B, 13A and 13B are diagrams of user interfaces according to various embodiments of the present disclosure.

### DETAILED DESCRIPTION OF EMBODIMENTS OF THE PRESENT DISCLOSURE

Hereinafter, various embodiments of the present disclosure are described with reference to the accompanying drawings. However, it should be understood that there is no intent to limit the present disclosure to the particular forms disclosed herein; rather, the present disclosure is intended to be construed to cover various modifications, equivalents, and/or alternatives of the present disclosure. In the descriptions of the drawings, similar reference numerals may be used to designate similar elements.

As used herein, the expressions "have", "may have", "include", and "may include" refer to the existence of a corresponding feature (e.g., a numeral, a function, an operation, or an element such as a component), and do not exclude one or more additional features.

In the present disclosure, the expressions "A or B", "at least one of A and/or B", and "one or more of A and/or B" may include all possible combinations of the items listed. For example, the expressions "A or B", "at least one of A and B", and "at least one of A or B" refer to all of (1) including at least one A, (2) including at least one B, and (3) including all of at least one A and at least one B.

The expressions "a first", "a second", "the first", and "the second" used in various embodiments of the present disclosure may modify various components regardless of the order and/or the importance but is not intended to limit the corresponding components. For example, a first user device and a second user device indicate different user devices but are both user devices. For example, a first element may be referred to as a second element, and similarly, a second element may be referred to as a first element without departing from the scope of the present disclosure.

It should be understood that when an element (e.g., a first element) is referred to as being (operatively or communicatively) "connected," or "coupled," to another element (e.g., a second element), the element may be directly connected or coupled to the other element or another element (e.g., a third element) may be interposer between them. In contrast, it may be understood that when an element (e.g., a first element) is referred to as being "directly connected," or "directly coupled" to another element (e.g., a second element), there is no element (e.g., a third element) interposed between them.

The expression "configured to" used in the present disclosure may be interchangeably used with, for example, the expressions "suitable for", "having the capacity to", "designed to", "adapted to", "made to", and "capable of' according to the situation. The expression "configured to" may not necessarily imply "specifically designed to" in hardware. Alternatively, in some situations, the expression "device configured to" may indicate that the device, together with other devices or components, "is able to". For example, the expression "processor adapted (or configured) to perform A, B, and C" may indicate a dedicated processor (e.g. an embedded processor) for performing only the corresponding operations or a general-purpose processor (e.g., a central processing unit (CPU) or an application processor (AP)) that can perform the corresponding operations by executing one or more software programs stored in a memory device.

The terms used in the present disclosure are only used to describe certain embodiments, but are not intended to limit the present disclosure. As used herein, singular forms may include plural forms as well unless the context clearly indicates otherwise. Unless defined otherwise, all terms used herein, have the same meanings as those commonly understood by a person skilled in the art to which the present disclosure pertains. Terms such as those defined in a generally used dictionary may be interpreted to have the same meanings as the contextual meanings in the relevant field of art, and are not intended to be interpreted to have ideal or excessively formal meanings unless clearly defined in the present disclosure. In some cases, even a term defined in the present disclosure is not intended to be interpreted to exclude embodiments of the present disclosure.

In the present disclosure, an electronic device may be a device that includes a communication function. For example, an electronic device may be a smart phone, a tablet personal computer (PC), a mobile phone, a video phone, an electronic (e-book) reader, a desktop PC, a laptop PC, a netbook computer, a personal digital assistant (PDA), a portable multimedia player (PMP), a moving picture experts group (MPEG) audio layer 3 (MP3) player, a portable medical device, a digital camera, or a wearable device (e.g., head-mounted device (HMD) such as electronic glasses, electronic clothes, an electronic bracelet, an electronic necklace, an electronic accessory, an electronic tattoo, a smart mirror, or a smart watch).

According to an embodiment of the present disclosure, an electronic device may be a smart home appliance that includes a communication function. For example, an electronic device may be a TV, a digital video disk (DVD) player, audio equipment, a refrigerator, an air conditioner, a vacuum cleaner, an oven, a microwave, a washing machine, an air cleaner, a set-top box, a TV box (e.g., Samsung HomeSync®, Apple TV®, Google TV™, etc.), a game console, an electronic dictionary, an electronic key, a camcorder, or an electronic picture frame.

According to an embodiment of the present disclosure, an electronic device may include at least one of various medical devices (e.g., various portable medical measuring devices (e.g., a blood glucose monitoring device, a heart rate monitoring device, a blood pressure measuring device, a body temperature measuring device, etc.), a magnetic resonance angiography (MRA) device, a magnetic resonance imaging (MRI) device, a computed tomography (CT) machine, and an ultrasonic machine), a navigation device, a global positioning system (GPS) receiver, an event data recorder (EDR), a flight data recorder (FDR), a vehicle infotainment device, an electronic device for a ship (e.g., a navigation device for a ship, and a gyro-compass), avionics, security devices, an automotive head unit, a robot for home or industry, an automated teller machine (ATM) in banks, point of sales (POS) devices in a shop, or an Internet of Things (IoT) device (e.g., a light bulb, various sensors, an electric or gas meter, a sprinkler device, a fire alarm, a thermostat, a streetlamp, a toaster, sporting goods, a hot water tank, a heater, a boiler, etc.)

According to an embodiment of the present disclosure, an electronic device may be furniture or part of a building or construction having a communication function, an electronic board, an electronic signature receiving device, a projector, or various measuring instruments (e.g., a water meter, an electric meter, a gas meter, a wave meter, etc.). An electronic device disclosed herein may be one of the above-mentioned devices or any combination thereof.

Hereinafter, an electronic device according to an embodiment of the present disclosure is described with reference to the accompanying drawings. As used herein, the term "user" may indicate a person who uses an electronic device or a device (e.g., an artificial intelligence electronic device) that uses an electronic device.

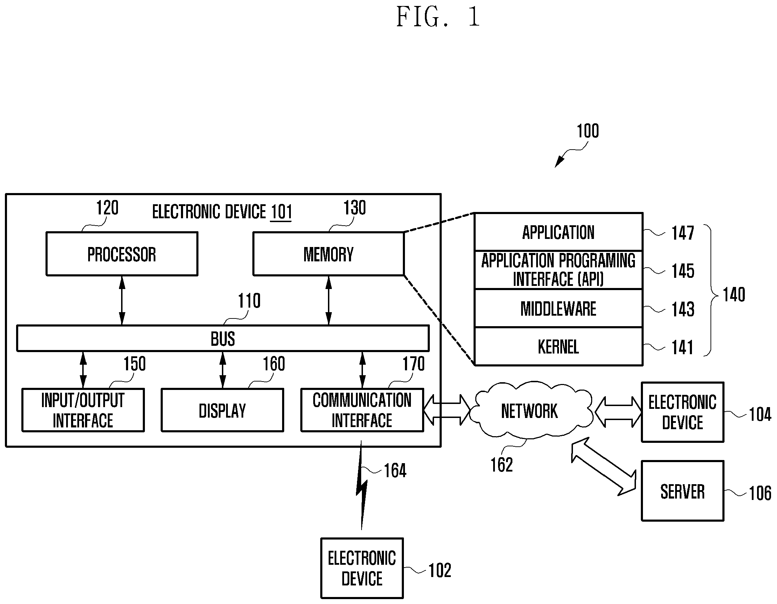

FIG. 1 is a block diagram of a network environment 100 including an electronic device 101 according to an embodiment of the present disclosure.

Referring to FIG. 1, the electronic device 101, in the network environment 100, includes a bus 110, a processor 120, a memory 130, an input/output interface 150, a display 160, and a communication interface 170. The electronic device 101 may omit at least one of the components or further include another component.

The bus 110 may be a circuit connecting the above described components and transmitting communication (e.g., a control message) between the above described components.

The processor 120 may include one or more of a CPU, an AP and a communication processor (CP). For example, the processor 120 may control at least one component of the electronic device 101 and/or perform a calculation relating to communication or data processing.

The memory 130 may include volatile and/or non-volatile memory. For example, the memory 130 may store a command or data relating to at least one component of the electronic device 101. According to an embodiment of the present disclosure, the memory may store software and/or a program 140. For example, the program 140 may include a kernel 141, middleware 143, an application programming interface (API) 145, and/or an application 147 and so on. At least one portion of the kernel 141, the middleware 143 and the API 145 may be defined as an OS.

The kernel 141 controls or manages system resources (e.g., the bus 110, the processor 120, or the memory 130) used for executing an operation or function implemented by the remaining other program, for example, the middleware 143, the API 145, or the application 147. Further, the kernel 141 provides an interface for accessing individual components of the electronic device 101 from the middleware 143, the API 145, or the application 147 to control or manage the components.

The middleware 143 performs a relay function for allowing the API 145 or the application 147 to communicate with the kernel 141 to exchange data. Further, in operation requests received from the application 147, the middleware 143 performs a control for the operation requests (e.g., scheduling or load balancing) by using a method of assigning a priority, by which system resources (e.g., the bus 110, the processor 120, the memory 130 and the like) of the electronic device 101 may be used, to the application 147.

The API 145 is an interface by which the application 147 may control a function provided by the kernel 141 or the middleware 142 and includes, for example, at least one interface or function (e.g., a command) for a file control, a window control, image processing, or a character control.

The input/output interface 150 may be an interface to transmit a command or data inputted by a user or another external device to another component(s) of the electronic device 101. Further, the input/output interface 150 may output a command or data received from another component(s) of the electronic device 101 to the user or another external device.

The display 160 may include, for example, a liquid crystal display (LCD), a light emitting diode (LED), an organic LED (OLED), a micro electro mechanical system (MEMS) display, or an electronic paper display. The display 160 may display, for example, various contents (e.g., text, an image, video, an icon, a symbol, and so on) to a user. The display 160 may include a touch screen, and receive a touch, a gesture, an approaching, or hovering, input using a part of a user's body.

The communication interface 170 may establish communication between the electronic device 101 and an external device (e.g., a first external device 102, a second external device 104, or a server 106). For example, the communication interface 170 may be connected to the network 162 through wireless communication or wire communication and communicate with the second external device 104 or the server 106.

Wireless communication may use, as a cellular communication protocol, at least one of long-term evolution (LTE), LTE Advance (LTE-A), code division multiple access (CDMA), wideband CDMA (WCDMA), universal mobile telecommunications system (UMTS), wireless broadband (WiBro), global system for mobile communications (GSM), and the like, for example. A short-range communication 164 may include, for example, at least one of wireless fidelity (Wi-Fi), Bluetooth (BT), near field communication (NFC), and global navigation satellite system (GNSS), and the like.

The GNSS may include at least one of, for example, a global positioning system (GPS), a global navigation satellite system (Glonass), a Beidou navigation satellite system (Beidou), and European global satellite-based navigation system (Galileo). Hereinafter, "GPS" may be interchangeably used with t "GNSS". Wired communication may include, for example, at least one of a universal serial bus (USB), a high definition multimedia interface (HDMI), recommended standard-232 (RS-232), plain old telephone service (POTS), and the like. The network 162 may include a telecommunication network, for example, at least one of a computer network (e.g., a local area network (LAN) or a wide area network (WAN)), the internet, and a telephone network.

Each of the first external device 102 and the second external device 104 may be the same or a different type of device than the electronic device 101. According to an embodiment of the present disclosure, the server 106 may include one or more group of servers. At least one portion of executions executed by the electronic device 101 may be performed by one or more of the first external device 102, the second external device 104, or server 106. If the electronic device 101 performs a function or service automatically, the electronic device 101 may request that at least one function be performed by the first external device 102, the second external device 104, or the server 106. For the above, cloud computing technology, distributed computing technology, or client-server computing technology may be used, for example.

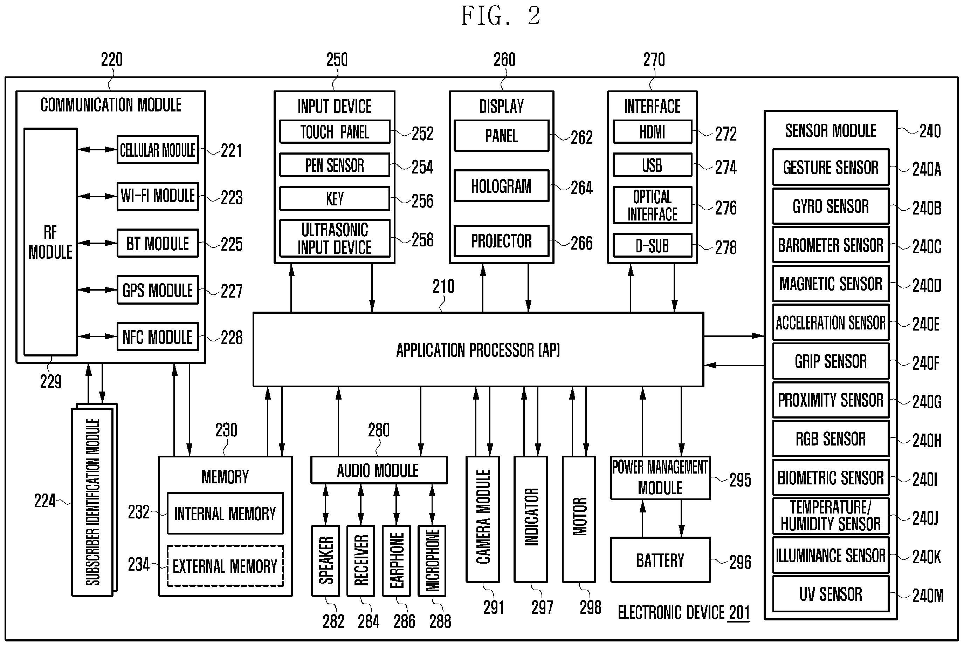

FIG. 2 is a block diagram of an electronic device 201 according to an embodiment of the present disclosure.

Referring to FIG. 2, the electronic device 201 may configure, for example, a whole or a part of the electronic device 101 illustrated in FIG. 1. The electronic device 201 includes one or more AP 210, a communication module 220, a subscriber identification module (SIM) card 224, a memory 230, a sensor module 240, an input device 250, a display 260, an interface 270, an audio module 280, a camera module 291, a power managing module 295, a battery 296, an indicator 297, and a motor 298.

The AP 210 operates an OS or an application program so as to control a plurality of hardware or software component elements connected to the AP 210 and executes various data processing and calculations including multimedia data. The AP 210 may be implemented by, for example, a system on chip (SoC). According to an embodiment of the present disclosure, the AP 210 may further include a graphics processing unit (GPU) and/or an image signal processor (ISP). The AP 210 may include at least one portion of components illustrated in FIG. 2 (e.g., a cellular module 221). The AP 210 may load a command or data received from at least one other component (e.g., a non-volatile memory), and store various data in the non-volatile memory.

The communication module 220 may include same or similar components as the communication interface 170 of FIG. 1. The communication module 220, for example, may include the cellular module 221, a Wi-Fi module 223, a BT module 225, a GPS module 227, an NFC module 228, and a radio frequency (RF) module 229.

The cellular module 221 provides a voice, a call, a video call, a short message service (SMS), or an internet service through a communication network (e.g., LTE, LTE-A, CDMA, WCDMA, UMTS, WiBro, GSM and the like). Further, the cellular module 221 may distinguish and authenticate electronic devices within a communication network by using a SIM card 224. According to an embodiment of the present disclosure, the cellular module 221 performs at least some of the functions which may be provided by the AP 210. For example, the cellular module 221 may perform at least some multimedia control functions. The cellular module 221 may include a CP.

Each of the Wi-Fi module 223, the BT module 225, the GPS module 227, and the NFC module 228 may include, for example, a processor for processing data transmitted/received through the corresponding module. Although the cellular module 221, the Wi-Fi module 223, the BT module 225, the GPS module 227, and the NFC module 228 are at least some (e.g., two or more) of the cellular module 221, the Wi-Fi module 223, the BT module 225, the GPS module 227, and the NFC module 228, the cellular module 221, the Wi-Fi module 223, the BT module 225, the GPS module 227, and the NFC module 228 may be included in one integrated circuit (IC) or one IC package. For example, at least some (e.g., a CP corresponding to the cellular module 221 and a Wi-Fi processor corresponding to the Wi-Fi module 223 of processors corresponding to the cellular module 221, the Wi-Fi module 223, the BT module 225, the GPS module 227, and the NFC module 228 may be implemented by one SoC.

The RF module 229 transmits/receives data, for example, an RF signal. The RF module 229 may include, for example, a transceiver, a power amplifier module (PAM), a frequency filter, a low noise amplifier (LNA) and the like. Further, the RF module 229 may further include a component for transmitting/receiving electronic waves over a free air space in a wireless communication, for example, a conductor, a conductive wire, and the like. Although the cellular module 221, the Wi-Fi module 223, the BT module 225, the GPS module 227, and the NFC module 228 share one RF module 229 in FIG. 2, at least one of the cellular module 221, the Wi-Fi module 223, the BT module 225, the GPS module 227, and the NFC module 228 may transmit/receive an RF signal through a separate RF module according to one embodiment of the present disclosure.

The SIM card 224 may be inserted into a slot formed in a certain portion of the electronic device 201. The SIM card 224 includes unique identification information (e.g., an integrated circuit card identifier (ICCID)) or subscriber information (e.g., an international mobile subscriber identity (IMSI)).

The memory 230 (e.g., the memory 130) may include an internal memory 232 or an external memory 234. The internal memory 232 may include, for example, at least one of a volatile memory (e.g., a random access memory (RAM), a dynamic RAM (DRAM), a static RAM (SRAM), a synchronous dynamic RAM (SDRAM), and the like), and a non-volatile memory (e.g., a read only memory (ROM), a one time programmable ROM (OTPROM), a programmable ROM (PROM), an erasable and programmable ROM (EPROM), an electrically erasable and programmable ROM (EEPROM), a mask ROM, a flash ROM, a not-and (NAND) flash memory, a not-or (NOR) flash memory, and the like).

According to an embodiment of the present disclosure, the internal memory 232 may be a solid state drive (SSD). The external memory 234 may further include a flash drive, for example, a compact flash (CF), a secure digital (SD) card, a micro-SD card, a mini-SD card, an extreme digital (xD) card, or a memory stick. The external memory 234 may be functionally connected to the electronic device 201 through various interfaces. The electronic device 201 may further include a storage device (or storage medium) such as a hard drive.

The sensor module 240 measures a physical quantity or detects an operation state of the electronic device 201, and converts the measured or detected information to an electronic signal. The sensor module 240 may include, for example, at least one of a gesture sensor 240A, a gyro sensor 240B, a barometer or atmospheric pressure (barometric) sensor 240C, a magnetic sensor 240D, an acceleration sensor 240E, a grip sensor 240F, a proximity sensor 240G, a color sensor 240H (e.g., a red, green, and blue (RGB) sensor) 240H, a biometric sensor 2401, a temperature/humidity sensor 240J, an illumination (e.g., light) sensor 240K, and a ultraviolet (UV) light sensor 240M. Additionally or alternatively, the sensor module 240 may include, for example, an electronic nose (E-nose) sensor, an electromyography (EMG) sensor, an electroencephalogram (EEG) sensor, an electrocardiogram (ECG) sensor, an infrared (IR) sensor, an iris sensor, a fingerprint sensor, and the like. The sensor module 240 may further include a control circuit for controlling one or more sensors included in the sensor module 240.

The input device 250 includes a touch panel 252, a (digital) pen sensor 254, a key 256, and an ultrasonic input device 258. For example, the touch panel 252 may recognize a touch input in at least one of a capacitive type touch panel, a resistive type touch panel, an infrared type touch panel, and an acoustic wave type touch panel. The touch panel 252 may further include a control circuit. In a capacitive type touch panel, the touch panel 252 may recognize a proximity as well as a direct touch. The touch panel 252 may further include a tactile layer. In this case, the touch panel 252 provides a tactile reaction to a user.

The (digital) pen sensor 254 may be implemented, for example, using a method identical or similar to a method of receiving a touch input of a user, or using a separate recognition sheet. The key 256 may include, for example, a physical button, an optical key, or a key pad. The ultrasonic input device 258 is a device which may detect an acoustic wave by a microphone 288 of the electronic device 201 through an input means generating an ultrasonic signal to identify data and may perform wireless recognition. According to an embodiment of the present disclosure, the electronic device 201 receives a user input from an external device (e.g., a computer or a server) connected to the electronic device 201 by using the communication module 220.

The display 260 (e.g., the display 160) includes a panel 262, a hologram device 264, and a projector 266. The panel 262 may be, for example, a LCD or an active matrix OLED (AM-OLED). The panel 262 may be implemented to be, for example, flexible, transparent, or wearable. The panel 262 may be configured by the touch panel 252 and one module. The hologram device 264 provides a stereoscopic image in the air by using the interference of light. The projector 266 projects light on a screen to display an image. For example, a screen may be located inside or outside of the electronic device 201. According to an embodiment of the present disclosure, the display 260 may further include a control circuit for controlling the panel 262, the hologram device 264, and the projector 266.

The interface 270 includes, for example, a HDMI 272, a USB 274, an optical interface 276, and a D-subminiature (D-sub) connector 278. The interface 270 may be included in, for example, the communication interface 170 illustrated in FIG. 1. Additionally or alternatively, the interface 270 may include, for example, a mobile high-definition link (MHL) interface, an SD card/multi-media card (MMC), or an Infrared Data Association (IrDA) standard interface.

The audio module 280 bi-directionally converts a sound and an electronic signal. At least some components of the audio module 280 may be included in, for example, the input/output interface 150 illustrated in FIG. 1. The audio module 280 processes sound information input or output through, for example, a speaker 282, a receiver 284, an earphone 286, the microphone 288, and the like.

The camera module 291 is a device which may photograph a still image and a video. According to an embodiment of the present disclosure, the camera module 291 may include one or more image sensors (e.g., a front sensor or a back sensor), an ISP or a flash (e.g., an LED or xenon lamp).

The power managing module 295 manages power of the electronic device 201. The power managing module 295 may include, for example, a power management integrated circuit (PMIC), a charger IC, or a battery gauge.

The PMIC may be mounted to, for example, in an IC or a SoC. A charging method may be divided into wired and wireless methods. The charger IC charges a battery and prevents an over voltage or an over current from flowing from a charger. According to an embodiment of the present disclosure, the charger IC includes a charger IC for at least one of a wired charging method and a wireless charging method. A wireless charging method may include, for example, a magnetic resonance method, a magnetic induction method and an electromagnetic wave method, and additional circuits for wireless charging, for example, circuits such as a coil loop, a resonant circuit, a rectifier and the like may be added.

The battery gauge measures, for example, a remaining quantity of the battery 296, a voltage, a current, or a temperature during charging. The battery 296 may store or generate electricity and supply power to the electronic device 201 by using the stored or generated electricity. The battery 296 may include a rechargeable battery or a solar battery.

The indicator 297 shows certain statuses of the electronic device 201 or a part (e.g., the AP 210) of the electronic device 201, for example, a booting status, a message status, a charging status and the like. The motor 298 converts an electrical signal to a mechanical vibration. The electronic device 201 may include a processing unit (e.g., a GPU) for supporting a mobile TV. The processing unit for supporting a mobile TV may process, for example, media data according to a standard of digital multimedia broadcasting (DMB), digital video broadcasting (DVB), MediaFlo™ and the like.

Each of the components of the electronic device according to an embodiment of the present disclosure may be implemented by one or more components and the name of the corresponding component may vary depending on a type of the electronic device. The electronic device may include at least one of the above described components, a few of the components may be omitted, or additional components may be further included. In addition, some of the components of the electronic device may be combined to form a single entity, and thus may equivalently execute functions of the corresponding components before being combined.

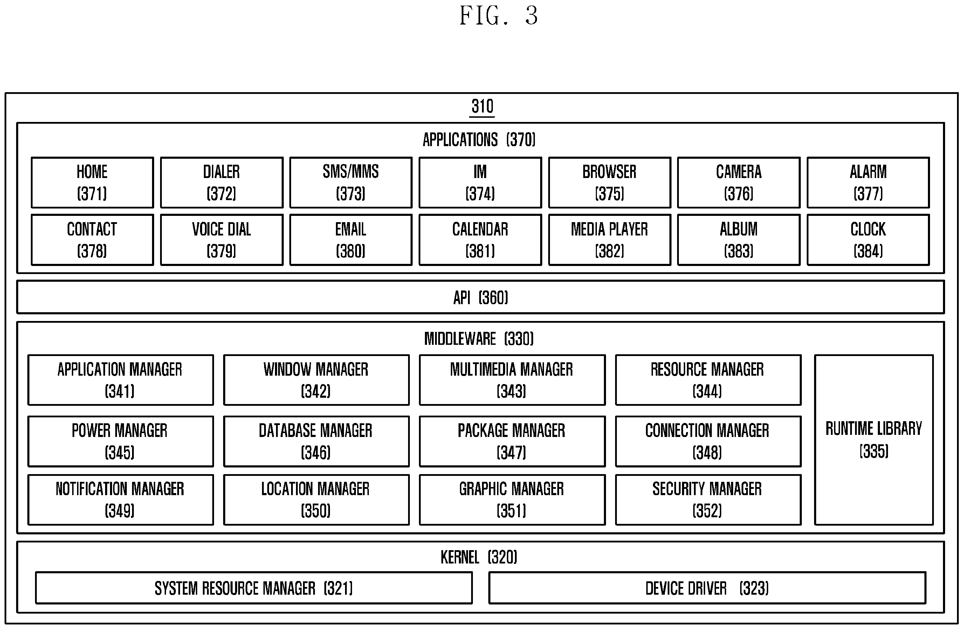

FIG. 3 is a block diagram of a programming module 310 according to an embodiment of the present disclosure.

Referring to FIG. 3, the programming module 310 may be included, e.g., stored, in the electronic apparatus 101, e.g., in the memory 130, as illustrated in FIG. 1. At least a part of the programming module 310 (e.g., the application 147) may be configured by software, firmware, hardware, and/or combinations of two or more thereof. The programming module 310 may include an OS that is implemented in hardware, e.g., the hardware 200 to control resources related to an electronic device, e.g., the electronic device 100, and/or various applications. e.g., applications 370, driven on the OS. For example, the OS may be Android®, iOS®, Windows®, Symbian®, Tizen®, Bada™, and the like. The programming module 310 may include a kernel 320, middleware 330, an API 360, and applications 370 (e.g., the application 147). At least part of the program module 310 may be preloaded on the electronic device or downloaded from a server (e.g., the first external device 102, the second external device 104, the server 106, etc.).

The kernel 320, which may be like the kernel 141, may include a system resource manager 321 and/or a device driver 323. The system resource manager 321 may include, for example, a process manager, a memory manager, and a file system manager. The system resource manager 321 may control, allocate, and/or collect system resources. The device driver 323 may include, for example, a display driver, a camera driver, a BT driver, a shared memory driver, a USB driver, a keypad driver, a Wi-Fi driver, and an audio driver. Further, according to an embodiment of the present disclosure, the device driver 323 may include an inter-process communication (IPC) driver.

The middleware 330 may include a plurality of modules implemented in advance for providing functions commonly used by the applications 370. Further, the middleware 330 may provide the functions through the API 360 such that the applications 370 may efficiently use restricted system resources within an electronic apparatus. For example, the middleware 330 may include at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352.

The runtime library 335 may include a library module that a compiler uses in order to add a new function through a programming language while one of the applications 370 is being executed. According to an embodiment of the present disclosure, the runtime library 335 may perform an input/output, memory management, and/or a function for an arithmetic function.

The application manager 341 may manage a life cycle of at least one of the applications 370. The window manager 342 may manage graphical user interface (GUI) resources used by a screen. The multimedia manager 343 may detect formats used for reproduction of various media files, and may perform encoding and/or decoding of a media file by using a codec suitable for the corresponding format. The resource manager 344 may manage resources such as source code, a memory, and a storage space of at least one of the applications 370.

The power manager 345 may manage a battery and/or power, while operating together with a basic input/output system (BIOS), and may provide power information used for an operation. The database manager 346 may manage the generation, a search of, and/or a change of a database to be used by at least one of the applications 370. The package manager 347 may manage the installation and/or an update of an application distributed in a form of a package file.

The connection manager 348 may manage wireless connectivity such as Wi-Fi or BT. The notification manager 349 may display and/or notify of an event, such as an arrival message, a promise, a proximity notification, and the like, in such a way that does not disturb a user. The location manager 350 may manage location information of an electronic apparatus. The graphic manager 351 may manage a graphic effect which will be provided to a user, and/or a user interface related to the graphic effect. The security manager 352 may provide all security functions used for system security and/or user authentication. According to an embodiment of the present disclosure, if an electronic apparatus, e.g., the electronic apparatus 100, has a telephone call function, the middleware 330 may further include a telephony manager for managing a voice and/or video communication function of the electronic apparatus. The middleware 330 may generate and use a new middleware module through various functional combinations of the aforementioned internal element modules. The middleware 330 may provide modules specialized according to types of OSs in order to provide differentiated functions. Further, the middleware 330 may dynamically remove some of the existing elements and/or add new elements. Accordingly, the middleware 330 may exclude some of the elements described in the various embodiments of the present disclosure, further include other elements, and/or substitute the elements with elements having a different name but performing a similar function.

The API 360, which may be similar to the API 133, is a set of API programming functions, and may be provided with a different configuration according to an OS. For example, in a case of Android® or iOS®, one API set may be provided for each OS platform, and in a case of Tizen®, two or more API sets may be provided.

The applications 370, which may include an application similar to the application 147, may include, for example, a preloaded application and/or a third party application. The applications 370 may include one or more of a home application 371 a dialer application 372, an SMS/multimedia messaging service (MMS) application 373, an instant messaging (IM) application 374, a browser application 375, a camera application 376, an alarm application 377, a contact application 378, a voice dial application 379, an email application 380, a calendar application 381, a media player application 382, an album application 383, a clock application 384, a health care application (e.g., a measurement of blood pressure, exercise intensity, etc.), an application for providing environmental information (e.g., atmospheric pressure, humidity, temperature, etc.), etc. However, the present embodiment is not limited thereto, and the applications 370 may include any other similar and/or suitable application.

According to an embodiment of the present disclosure, the applications 370 are capable of including an application for supporting information exchange between an electronic device (e.g., the electronic device 101) and an external device (e.g., the first external device 102 and the second external device 104), (e.g., an information exchange application)). The information exchange application is capable of including a notification relay application for relaying certain information to external devices or a device management application for managing external devices.

For example, the notification relay application is capable of including a function for relaying notification information, created in other applications of the electronic device (e.g., the SMS/MMS application 373, the email application 380, the health care application, the environmental information application, etc.) to external devices (e.g., the first external device 102 and the second external device 104). In addition, the notification relay application is capable of receiving notification information from external devices to provide the received information to a user.

The device management application is capable of managing (e.g., installing, removing or updating) at least one function of an external device (e.g., the first external device 102 and the second external device 104) communicating with the electronic device. Examples of the function are a function of turning-on/off an external device or part of an external device, a function of controlling the brightness (or resolution) of a display, applications running on an external device, services provided by an external device, etc. Examples of the services are a call service, messaging service, etc.

According to an embodiment of the present disclosure, the applications 370 are capable of including an application (e.g., a health care application of a mobile medical device, etc.) specified attributes of an external device (e.g., the first external device 102 and the second external device 104). The applications 370 are capable of including applications received from an external device (e.g., the server 106, the first external device 102 and the second external device 104). The applications 370 are capable of including a preloaded application or third party applications that can be downloaded from a server. It should be understood that the components of the program module 310 may be called different names according to the types of operating systems.

According to an embodiment of the present disclosure, at least part of the program module 310 can be implemented with software, firmware, hardware, or any combination of two or more of them. At least part of the program module 310 can be implemented (e.g., executed) by a processor (e.g., the processor 210). At least part of the programing module 310 may include modules, programs, routines, sets of instructions or processes, etc., in order to perform one or more functions.

In the present disclosure, the term "module" refers to a unit including hardware, software, firmware or a combination thereof. For example, the term "module" is interchangeable with the terms "unit," "logic," "logical block," "component," "circuit," or the like. The term "module" may indicate the smallest unit or a part of an integrated component. The term "module" may indicate the smallest unit or a part thereof that can perform one or more functions. The term "module" may indicate a unit that may be implemented in mechanical or electronic mode. For example, the term "module" may indicate a unit that includes at least one of an application specific integrated circuit (ASIC), a field-programmable gate array (FPGA) and a programmable-logic device that can perform functions that are known or will be developed.

At least part of the method (e.g., operations) or devices (e.g., modules or functions) according to various embodiments of the present disclosure may be implemented with instructions that can be conducted via various types of computers and stored in non-transitory computer-readable storage media, as types of programming modules, for example. One or more processors (e.g., the processor 120) can execute command instructions, thereby performing the functions. An example of the non-transitory computer-readable storage media may be the memory 130.

Examples of non-transitory computer-readable storage media include magnetic media, such as hard disks, floppy disks, and magnetic tape; optical media such as compact disc ROM (CD-ROM) disks and DVDs; magneto-optical media, such as floptical disks; and hardware devices such as ROM, RAM, flash memory, etc. Examples of program instructions include machine code instructions created by assembly languages, such as a compiler, and code instructions created by a high-level programming language executable in computers using an interpreter, etc. The described hardware devices may be configured to act as one or more software modules to perform the operations of various embodiments described above, or vice versa.

Modules or programming modules according to various embodiments of the present disclosure may include one or more components, remove part of them described above, or further include new components. The operations performed by modules, programming modules, or other components, may be executed in serial, parallel, repetitive or heuristic fashion. Part of the operations can be executed in any other order, skipped, or executed with additional operations.

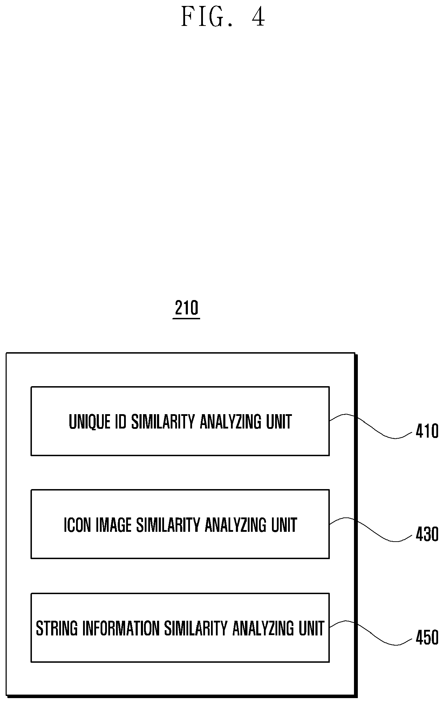

FIG. 4 is a block diagram of the processor 120 of the electronic device 101 according to an embodiment of the present disclosure.

Referring to FIG. 4, the processor 120 is capable of including a unique identification (ID) similarity analyzing unit 410, an icon image similarity analyzing unit 430 and a string information similarity analyzing unit 450. In an embodiment of the present disclosure, the processor 120 may be implemented in such a way as to omit at least one of the components described above or to further include other components.

In various embodiments of the present disclosure, the processor 120 may be a processor of an external electronic device (e.g., the first external device 102, the second external device 104, the server 106, etc.). For example, the electronic device 101 is capable of receiving an input command for detecting similar applications, and transmitting the received input command to an external electronic device. The external electronic device is capable of analyzing whether similar applications exist, based on the received input command, and returning the result to the electronic device 101.

In various embodiments of the present disclosure, the unique ID similarity analyzing unit 410 is capable of comparing a unique ID of at least one application implemented on a certain OS with that of a certain application and analyzing the result. For example, the unique ID similarity analyzing unit 410 is capable of detecting whether at least one application includes an application whose unique ID is identical to that of a certain application. If the unique ID similarity analyzing unit 410 ascertains that at least one application includes an application whose unique ID is identical to that of a certain application, it is capable of determining the ascertained application as an application identical to the certain application. In contrast, if the unique ID similarity analyzing unit 410 ascertains that at least one application does not include an application whose unique ID is identical to that of a certain application, it is capable of fragmenting a unique ID of a certain application and a unique ID of at least one application into strings, according to a delimiter (e.g., a period "."). The unique ID similarity analyzing unit 410 is capable of analyzing the similarity between at least one application and the certain application, based on the fragmented strings. The unique ID similarity analyzing unit 410 is capable of obtaining a second similarity value of each of at least one application, based on the analyzed similarity.

In various embodiments of the present disclosure, the icon image similarity analyzing unit 430 is capable of comparing an icon image of at least one application implemented on a certain OS with that of a certain application, and analyzing the result. For example, the icon image similarity analyzing unit 430 is capable of standardizing an icon image for a certain application. The icon image similarity analyzing unit 430 is capable of analyzing the similarity between at least one application and the certain application, based on the standardized icon image. The icon image similarity analyzing unit 430 is capable of obtaining a third similarity value of each of at least one application, based on the analyzed similarity. The icon image similarity analyzing unit 430 is capable of detecting whether at least one application includes an application which has a third similarity value greater than or equal to a third threshold. The icon image similarity analyzing unit 430 is capable of determining an application which has a third similarity value greater than or equal to a third threshold as an application identical to the certain application.

In various embodiments of the present disclosure, the string information similarity analyzing unit 450 is capable of comparing string information regarding at least one application implemented on a certain OS with that regarding a certain application; and analyzing the result. For example, the string information similarity analyzing unit 450 is capable of obtaining a fourth similarity value regarding each of at least one application, based on the analyzed similarity. The string information similarity analyzing unit 450 is capable of detecting whether at least one application includes an application which has a fourth similarity value greater than or equal to a fourth threshold. If the string information similarity analyzing unit 450 ascertains that at least one application includes an application which has a fourth similarity value greater than or equal to a fourth threshold, it is capable of determining the ascertained application which has a fourth similarity value greater than or equal to a fourth threshold as an application identical to the certain application.

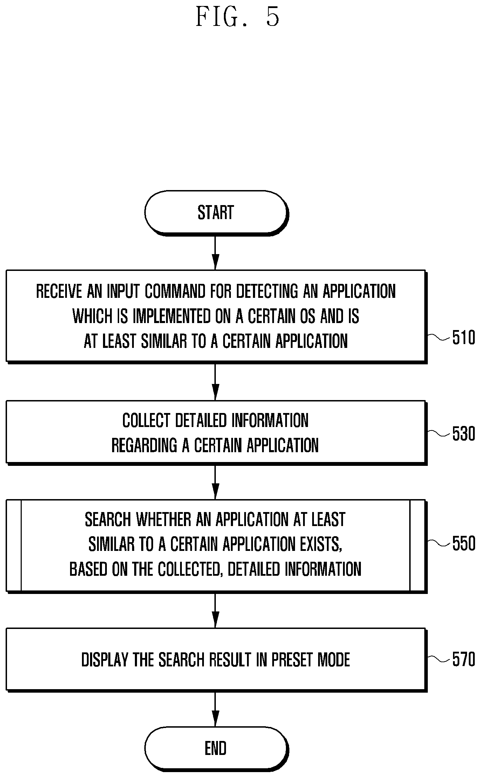

FIG. 5 is a flowchart of a method of detecting similar applications according to an embodiment of the present disclosure.

Referring to FIG. 5, the processor 120 of the electronic device 101 is capable of receiving an input command for detecting an application which is implemented on a certain OS and is at least similar to a certain application in step 510.

In various embodiments of the present disclosure, examples of a certain OS are Android®, iOS®, Windows®, Symbian®, Tizen®, and Bada™. It should be understood that the present disclosure is not limited to the OSs listed above, but may also include other types of OSs.

In various embodiments of the present disclosure, a certain OS may be an OS that is identical to or different from an OS implemented on a certain application. For example, if it is assumed that an application, which is at least similar to a first application implemented on iOS®, is detected, a user can detect an application which is similar to the first application and is implemented on an OS according to a user's purpose, i.e., iOS®. A user may detect an application which is identical or similar to the first application and is implemented on another OS according to a user's purpose, i.e., Android®.

In an embodiment of the present disclosure, an application, which is at least similar to an application, may be defined as an application which is identical or similar to a certain application. In addition, a similar application may be determined in such a way as to compare to a similarity value, obtained from the relation with a certain application, with a preset threshold. A method of determining whether an application is a similar application is described below in greater detail.

In various embodiments of the present disclosure, an input command for detecting an application at least similar to a certain application may be input by a user; received from another external device; or automatically received according to an occurrence of an event. The expression "occurrence of an event" may refer to cases where an electronic device 101 or a user enters a certain place; a preset time arrived; a registration of a new user is detected; an identical user's account registered in another OS is discovered; etc.

The processor 120 of the electronic device 101 is capable of collecting detailed information regarding a certain application in step 530.

In an embodiment of the present disclosure, the expression "detailed information" may be defined as data including attribute information or data describing a certain application. The detailed information may include at least part of string information (e.g., a genre, a title, a description, a developer, etc.), icon image information, and unique ID information regarding a certain application.

In various embodiments of the present disclosure, the electronic device 101 is capable of collecting detailed information regarding a certain application from a database of an external electronic device (e.g., the first external device 102, the second external device 104, the server 106, etc.) or its memory. The electronic device 101 or external electronic device may further include a crawler. For example, if the electronic device 101 ascertains that detailed information regarding a certain application is not stored in a database of an external electronic device or the memory of the electronic device 101, the crawler is capable of creating detailed information regarding a certain application, through a method of automatically searching web sites for various information, etc. The detailed information created by the crawler may be stored in the memory of the electronic device 101 or a database of an external electronic device.

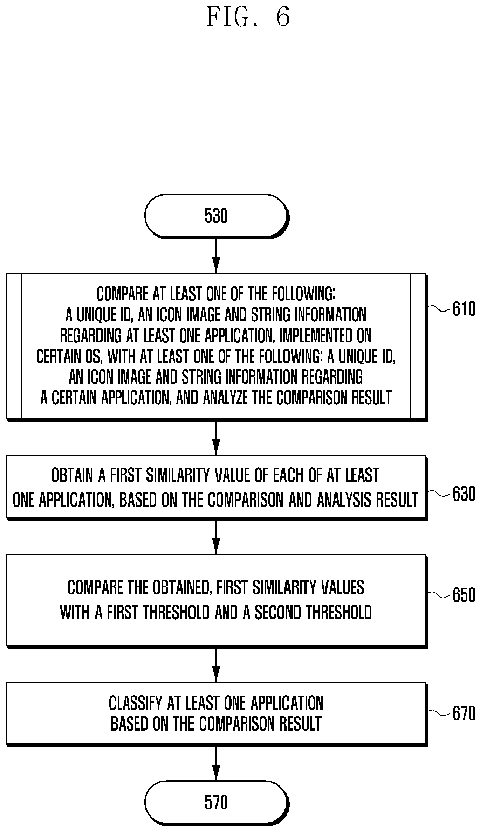

The processor 120 of the electronic device 101 is capable of searching whether an application at least similar to a certain application exists, based on the collected, detailed information in step 550. The method of performing step 550 is described in greater detail below with reference to FIG. 6.

FIG. 6 is a flowchart of a method of searching whether similar applications exist according to an embodiment of the present disclosure.

Referring to FIG. 6, the processor 120 of the electronic device 101 is capable of comparing at least one of a unique ID, an icon image and string information regarding at least one application, implemented on a certain OS, with at least one of a unique ID, an icon image and string information regarding a certain application, and analyzing the result in step 610.

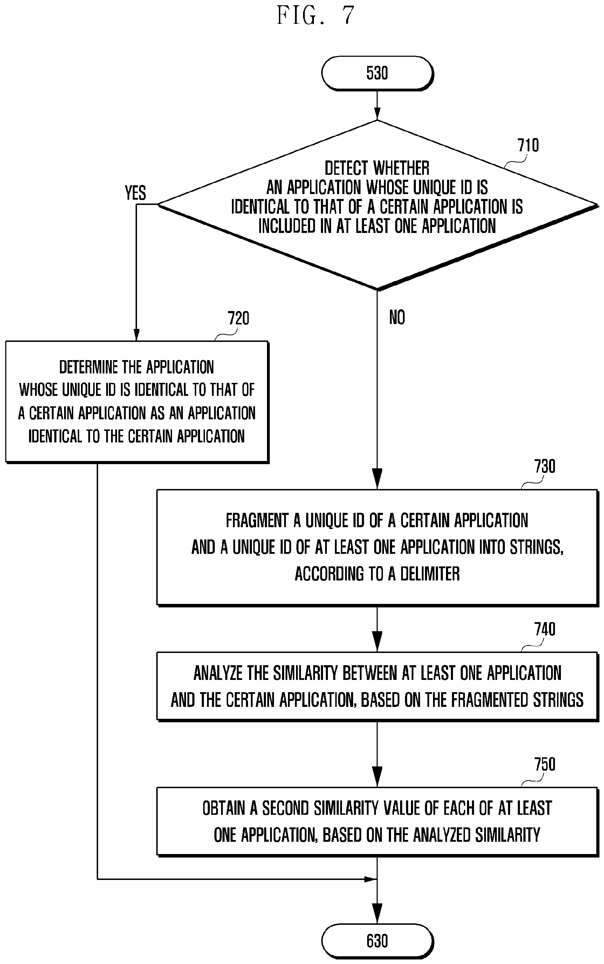

In an embodiment of the present disclosure, the unique ID similarity analyzing unit 410 is capable of comparing a unique ID of each of at least one application with that of a certain application, and analyzing the result. The icon image similarity analyzing unit 430 is capable of comparing an icon image of each of at least one application with that of a certain application, and analyzing the result. The string information similarity analyzing unit 450 is capable of comparing string information regarding each of at least one application with that of a certain application, and analyzing the result. The unique ID, icon image and string information may be simultaneously or not simultaneously analyzed. Alternatively, the unique ID, icon image and string information may be sequentially analyzed. A detailed description regarding embodiments of the present disclosure for comparing among and analyzing the unique ID, the icon image and the string information is provided below with reference to FIGs. 7 to 11.

The processor 120 of the electronic device 101 is capable of obtaining a first similarity value of each of at least one application, based on the comparison and analysis result in step 630.

In various embodiments of the present disclosure, the first similarity value may be obtained in collective consideration of results which are acquired in such a way as to compare at least one of a unique ID, an icon image, and string information regarding an application with at least one of a unique ID, an icon image, and string information regarding a certain application. For example, if the processor 120 compares and analyzes all of a unique ID, an icon image and the similarity of string, the processor 120 sums up similarity values obtained from individual similarity analyzing units and thus obtains a first similarity value. The processor 120 is capable of comparing and analyzing only the similarity of icon images. In this case, a first similarity value may be identical to the similarity value obtained from the icon image similarity analyzing unit.

In an embodiment of the present disclosure, the processor 120 may apply different weights to individual similarity analyzing units. For example, the processor 120 may obtain a first similarity value in such a way as to apply a greater weight to a similarity value obtained from the unique ID similarity analyzing unit 410 than that obtained from the icon image similarity analyzing unit 430.

The processor 120 is capable of determining whether it satisfies a preset condition, before obtaining a first similarity value. For example, if the processor 120 ascertains that applications differ from each other in terms of main classification of genre (e.g., game and social), it is capable of determining an application as a dissimilar application without obtaining a first similarity value. A preset condition may be set, using information contained in detailed information, information which can be obtained from the Internet web, etc.

The processor 120 of the electronic device 101 is capable of comparing the obtained, first similarity values with a first threshold and a second threshold in step 650.

In various embodiments of the present disclosure, the first threshold is a lower limit to determine whether an application is an identical application, and the second threshold may be a lower limit to determine whether an application is a similar application. The first threshold is an upper limit to determine whether an application is an identical application, and the second threshold may be an upper limit to determine whether an application is a similar application. That is, if the similarity increases in proportion to a rise in similarity value, the processor 120 is capable of determining whether an application is an identical application and a similar application, based on the lower limits of the first and second thresholds. Similarly, if the similarity increases in proportion to the fall in similarity value, the processor 120 is capable of determining whether an application is an identical application and a similar application, based on the upper limits of the first and second thresholds.

Alternatively, the processor 120 is capable of determining whether an application is an identical application and a similar application, using only one of the thresholds. For example, one of the thresholds may be an upper limit or a lower limit to determine whether an application is an application at least similar to a certain application.

In various embodiments of the present disclosure, the first and second thresholds may be automatically updated based on data stored or preset by a user. In an automatic update method based on stored data, the first threshold may be an average of first similarity values of identical applications and the second threshold may be an average of first similarity values of similar applications. That is, the threshold may be an average of identical applications.

The processor 120 of the electronic device 101 is capable of classifying at least one application based on the comparison result in step 670.

In various embodiments of the present disclosure, at least one application may each be classified into an identical application, a similar application or a dissimilar application. At least one application may each be classified into an application at least similar to a certain application and a dissimilar application.

For example, the obtained first similarity value may be compared to the first and second thresholds. If the obtained first similarity value is greater than or equal to the first threshold, the processor 120 determines the application as an identical application. If the obtained first similarity value is less than the first threshold and is greater than or equal to the second threshold, the processor 120 determines the application as a similar application. If the first similarity value is less than the second threshold, the processor 120 determines the application as a dissimilar application.

As another example, the obtained first similarity value may be compared to a certain threshold. If the obtained first similarity value is greater than or equal to a certain threshold, the processor 120 determines the application as a similar application. If the first similarity value is less than a certain threshold, the processor 120 determines the application as a dissimilar application.

Although the embodiments of the present disclosure described above classify applications based on a lower limit, it should be understood that the embodiments may also be modified in such a way as to classify applications based on an upper limit.

Referring to FIG. 5, the processor 120 of the electronic device 101 is capable of controlling the display to display the search results in preset modes in step 570.

In various embodiments of the present disclosure, examples of the preset display modes are a method of displaying only identical applications, a method of classifying applications into identical and similar applications and displaying the classified applications, a method of recommending and displaying an application with the largest first similarity value, etc.

A method of analyzing similarity between detailed information according to an embodiment of the present disclosure is described below in greater detail with reference to the accompanying drawings.

FIG. 7 is a flowchart of a method of analyzing similarity between unique IDs according to an embodiment of the present disclosure.

Referring to FIG. 7, the unique ID similarity analyzing unit 410 is capable of detecting whether an application whose unique ID is identical to that of a certain application is included in at least one application in step 710.

Although applications run on different OSs, unique IDs between identical applications may be identical to each other. For example, if a unique ID of a certain application implemented on an iOS® is "bwebmedia.ponyhairsalongame," the unique ID similarity analyzing unit 410 is capable of determining whether there is an application which is implemented on Android® and whose unique ID is "bwebmedia.ponyhairsalongame."

If the unique ID similarity analyzing unit 410 ascertains that there is an application which is implemented on Android® and whose unique ID is "bwebmedia.ponyhairsalongame," it proceeds with step 720.

The unique ID similarity analyzing unit 410 is capable of determining the application whose unique ID is identical to that of a certain application as an application identical to the certain application in step 720.

In various embodiments of the present disclosure, although applications run on different OSs, if their unique IDs are identical to each other, it may be recognized that the applications are related to each other with a relatively high probability of identity. For example, if unique IDs of applications implemented on iOS® and Android® are identical to each other, as "bwebmedia.ponyhairsalongame," it may be recognized that both of the applications may be an application corresponding to "Pony hair Salon game" on each of the OSs.

In an embodiment of the present disclosure, an application, determined as an identical application via the similarity analysis of unique ID, may not need to be processed by the similarity analysis of other components. For example, if an application is already determined as an identical application, it does not need to be processed by additional similarity analyses, such as the similarity analysis of icon images, the similarity analysis of strings, etc. Although an application is determined as an identical application via the similarity analysis of unique ID, a preset weight may be previously applied to the application in order to prevent the application from being determined as a dissimilar application because of the results of other similarity analyses. For example, a method of assigning weights may be a method of assigning the maximum one of the similarity values that another similarity analyzing unit can obtain.

In an embodiment of the present disclosure, the similarity analysis procedure of other components (e.g., icon image and string information) may be omitted depending on purposes for searching for an application at least similar to a certain application. For example, if the purpose for searching for an application at least similar to a certain application is to search whether an identical application exists, the similarity analysis procedure of other components may be omitted. If an identical application has been searched, searching for a similar application does not need to be performed.

In addition, if the unique ID similarity analyzing unit 410 ascertains that an application whose unique ID is identical to that of a certain application is not included in at least one application in step 710, it proceeds with step 730.

The unique ID similarity analyzing unit 410 is capable of fragmenting a unique ID of a certain application and a unique ID of at least one application into strings, according to a delimiter (e.g., ".") in step 730.

In various embodiments of the present disclosure, since individual OSs may have unique ID formats that differ from each other, unique IDs may not be identical to each other. Although unique ID formats are identical to each other, unique IDs between different OSs may differ from each other. However, since preset strings may have a high probability of identity/similarity between identical or similar applications implemented on different OSs, this is used in the analysis. For example, if a unique ID is "bwebmedia.ponyhairsalongame," strings may be fragmented into "bwebmedia" and "ponyhairsalongame."

The unique ID similarity analyzing unit 410 is capable of analyzing the similarity between at least one application and the certain application, based on the fragmented strings in step 740.

In various embodiments of the present disclosure, the method of analyzing the similarity of strings may be implemented, using an algorithm for comparing the similarity of voices, an algorithm for comparing the similarity of characters, a language model, etc. Since the method of analyzing the similarity of strings is well-known to those who are skilled in the art, its detailed description is omitted below.

The unique ID similarity analyzing unit 410 is capable of obtaining a second similarity value of each of at least one application, based on the analyzed similarity in step 750.

In various embodiments of the present disclosure, the second similarity value may be calculated in such a way as to apply a degree of similarity to the maximum mark assigned to the unique ID similarity analyzing unit 410 (if a lower limit threshold is used). For example, if the maximum mark assigned to the unique ID similarity analyzing unit 410 is 10, an application so that strings fragmented from a unique ID are similar to each other approximately 80% may obtain a mark of eight as a second similarity value.

The unique ID similarity analyzing unit 410 is capable of filtering out applications (if a lower limit threshold is used) whose second similarity value is relatively large. For example, if n applications whose second similarity value is relatively large are filtered out, the other similarity analyzing unit is capable of analyzing the similarity of only n filtered applications. In an embodiment, the filtering function may be used as a standard for determining applications as an application at least similar to a certain application.

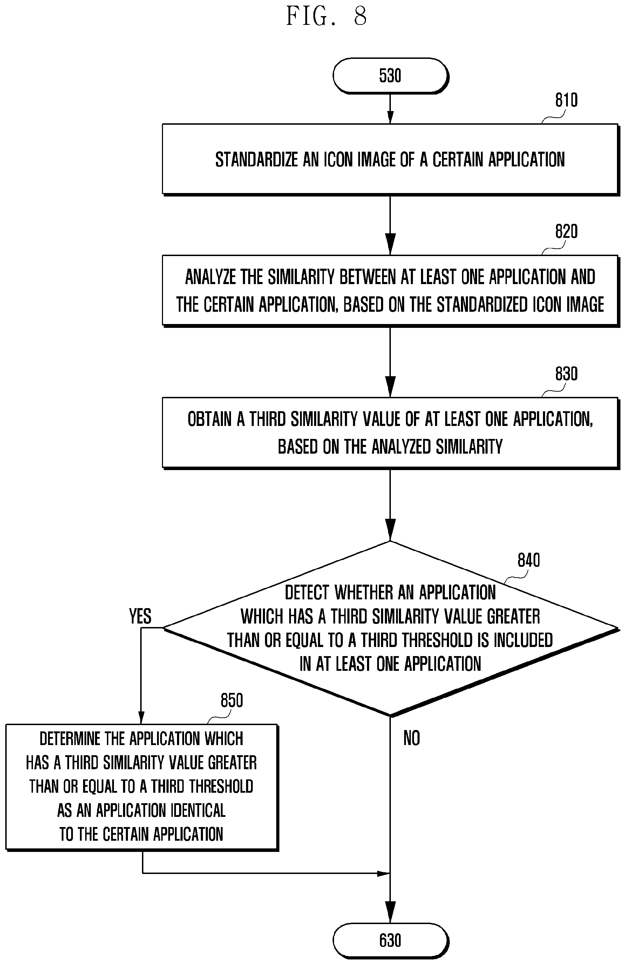

FIG. 8 is a flowchart of a method of analyzing similarity between icon images according to an embodiment of the present disclosure.

Referring to FIG. 8, the icon image similarity analyzing unit 430 is capable of standardizing an icon image of a certain application in step 810.

In various embodiments of the present disclosure, an icon image similarity analyzing unit 430 is capable of standardizing an icon image of at least one application compared with a certain application. The icon image similarity analyzing unit 430 is capable of standardizing an icon image of a certain application and an icon image of at least one application, compared with it. It should be understood that the present disclosure is not limited to the standardization of an icon image of a certain application, and icon images to be standardized may vary depending on conditions, which can also be encompassed in the present disclosure.

In various embodiments of the present disclosure, in order to standardize icon images, the icon image similarity analyzing unit 430 is capable of modifying an icon image related to a certain application into a standardized icon image so that they can be identical to each other in shape and size, and filling the background of an icon image after the modification with the background color of the icon image before the modification.

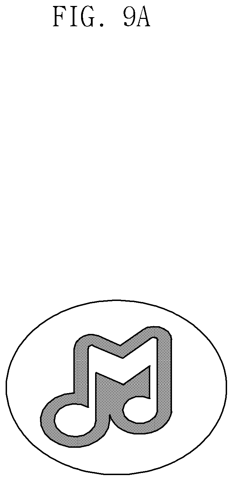

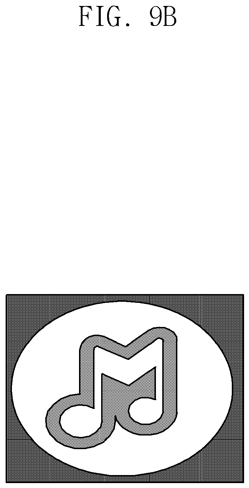

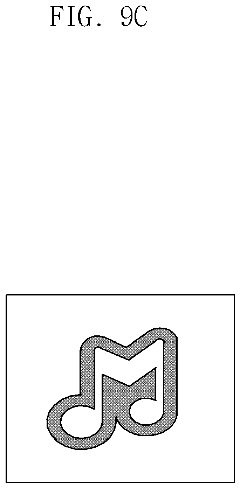

FIGs. 9A, 9B, and 9C are diagrams that illustrate standardization of icon images according to an embodiment of the present disclosure.

Referring to FIG. 9A, an icon image is created as a circular and/rounded shape. For example, icon images used on iOS® may be rounded or circular shapes, and icon images used on Android® may be rectangular shapes. In order to standardize icon images used on iOS® to those used on Android®, the icon image similarity analyzing unit 430 is capable of converting the size and form of icons shaped as a circular or rounded form into icon images shaped as a rectangular form.

Referring to FIG. 9B, an icon image shaped as a circular/elliptical/rounded form is modified into a standardized icon image in such a way that it is enlarged or reduced in size, proportionally, so that they can be the same size. In addition, an icon image shaped as a circular/elliptical/rounded form may also be modified into an icon image shaped as a rectangular form. For example, if an image icon shaped as a circle or elliptical form is changed in shape and size, it may have a margin.

Referring to FIG. 9C, the margin may be filled with the background color of the existing icon image (i.e., the background color of the icon image before the change). The measurement of the similarity between identical applications with the standardization of an icon image may obtain a greater similarity value than that of the similarity between identical applications without the standardization of an icon image.

Referring to FIG. 8, the icon image similarity analyzing unit 430 is capable of analyzing the similarity between at least one application and the certain application, based on the standardized icon image in step 820.

The analysis of the similarity between icon images may be implemented with various methods, such as a histogram comparison method, a template matching method, a feature matching method, etc. It should be understood that the analysis of the similarity between icon images according to the present disclosure is not limited to the methods as listed above, and may also be implemented with various methods, without departing from the scope of the present disclosure.

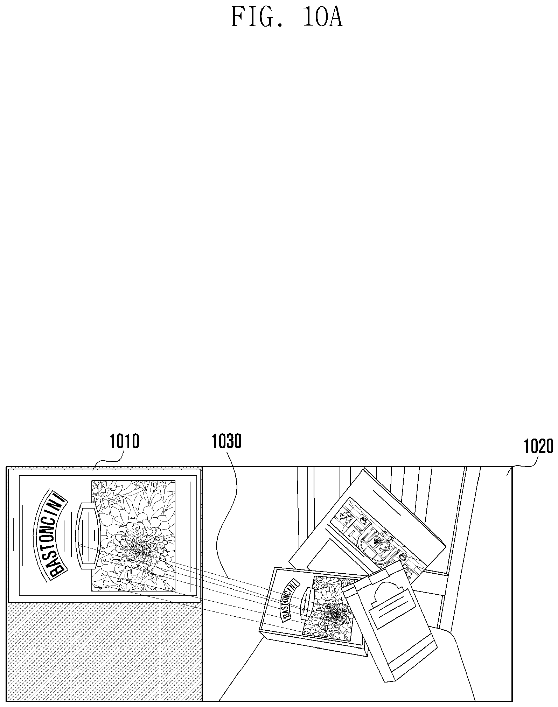

FIGs. 10A to 10C show diagrams that describe a method of analyzing the similarity between icon images according to various embodiments of the present disclosure.

FIG. 10A is a diagram that illustrates a method of analyzing similarity between images according to a feature matching method according to an embodiment of the present disclosure.

Referring to FIG. 10A, the similarity between a first image 1020 and a second image 1010 may be analyzed. For example, it is performed to analyze whether the second image 1010 includes a portion 1030 matching the characteristics of the first image 1020 (e.g., location, distance, and color). Since an analysis technology of similarity between images using the feature matching method is well-known to those who are skilled in the art, a detailed description is omitted below.

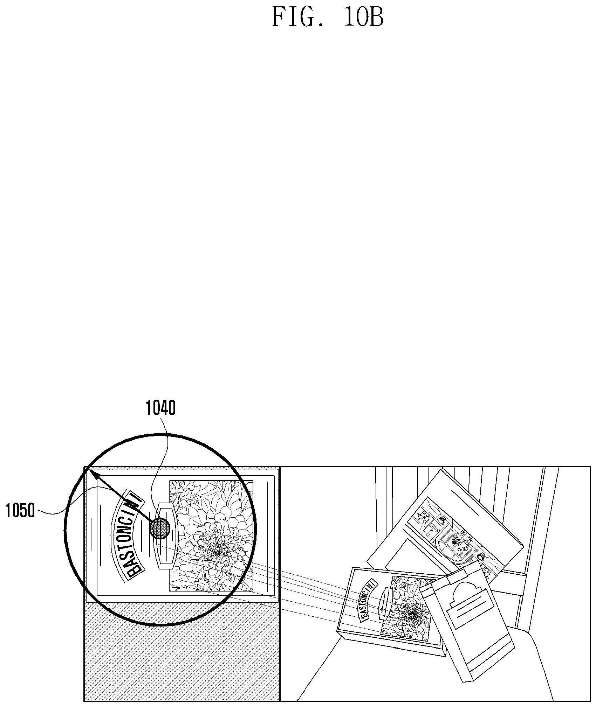

FIG. 10B is a diagram that illustrates a method of analyzing similarity between images by applying weights, according to an embodiment of the present disclosure.

The method of analyzing the similarity between images by applying weights is performed, considering the particular properties of an icon image. That is, the method of analyzing the similarity between images by applying weights uses a fact (property or phenomenon) that the closer the centers of identical or similar icon images are to each other (the lesser the distance between the centers of identical or similar icon images) the greater the similarity therebetween.

Referring to FIG. 10B, the distance 1050 between pixels may be calculated with respect to the center point 1040 of a circle. Different weights may be applied for the similarity, depending on distances. Distances between pixels and the center point are formed into a matrix, and then the determinant of a matrix forming the center point is calculated. After the distances between pixels and the center point 1040 of a circle are calculated, weights depending on the distances may be applied for similarity. For example, a weight of a pixel apart from the center point 1040 of a circle by four may be greater than that of a pixel apart from the center point 1040 of a circle by 15.

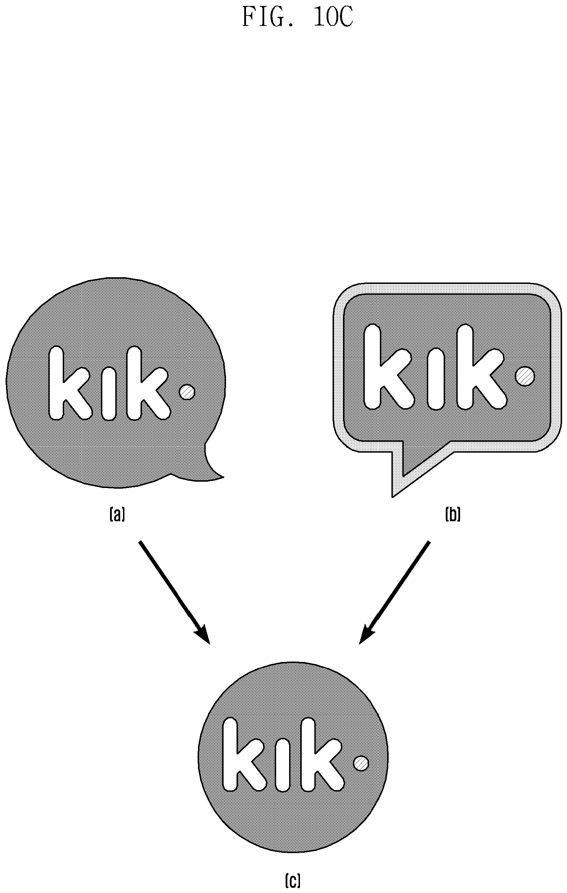

FIG. 10C is a diagram that illustrates a method of analyzing similarity between icon images according to an embodiment of the present disclosure.

Referring to FIG. 10C, icon images of an identical application implemented on OSs that differ from each other are shown. Although a first icon image shown in diagram (a) and a second icon image shown in diagram (b) are actually related to an identical application, they may be determined as dissimilar icons if the similarity of an icon image is analyzed by using the feature matching method. However, if weights depending on distances from the center point are employed, considering the particular properties of icon images, the first icon image and the second icon image may be determined as an identical or similar icon. This is because the first icon image and the second icon image are identical or similar to each other for a portion of image within a radius from the center point, as shown in diagram (c).

Referring to FIG. 8, the icon image similarity analyzing unit 430 is capable of obtaining a third similarity value of at least one application, based on the analyzed similarity in step 830.

In various embodiments of the present disclosure, the third similarity value may be calculated in such a way as to apply a degree of similarity to the maximum mark assigned to the icon image similarity analyzing unit 430 (if a lower limit threshold is used). For example, if the maximum mark assigned to the icon image similarity analyzing unit 430 is 10, an application determined so that both image icons are similar to each other approximately 40% may obtain a mark of four as a third similarity value.

The icon image similarity analyzing unit 430 is capable of filtering out applications (if a lesser limit threshold is used) whose third similarity value is relatively large. For example, if m applications whose third similarity value is relatively great are filtered out, the other similarity analyzing unit is capable of analyzing the similarity of only m filtered applications. The filtering function may be used as a standard for determining applications as an application at least similar to a certain application.

The icon image similarity analyzing unit 430 is capable of detecting whether an application which has a third similarity value greater than or equal to a third threshold is included in at least one application in step 840.

If the icon image similarity analyzing unit 430 ascertains that an application which has a third similarity value greater than or equal to a third threshold is included in at least one application in step 840, it proceeds with step 850.

The icon image similarity analyzing unit 430 is capable of determining the application which has a third similarity value greater than or equal to a third threshold as an application identical to the certain application in step 850.

The application, determined as an identical application via the similarity analysis of an icon image, may not need to be processed by the similarity analysis of other components. For example, if an application is already determined as an identical application, it does not need to be processed by additional similarity analyses, such as the similarity analysis of unique ID, the similarity analysis of string, etc. Although an application is determined as an identical application via the similarity analysis of an icon image, a preset weight may be previously applied to the application in order to prevent the application from being determined as a dissimilar application because of the results of other similarity analyses. For example, a method of assigning weights may be a method of assigning the maximum one of the similarity values that another similarity analyzing unit can obtain.

In an embodiment of the present disclosure, the similarity analysis procedure of other components (e.g., unique ID and string information) may be omitted depending on purposes for searching for an application at least similar to a certain application. For example, if the purpose for searching for an application at least similar to a certain application is to search whether an identical application exists, the similarity analysis procedure of other components may be omitted. If an identical application has been searched, searching for a similar application does not need to be performed.

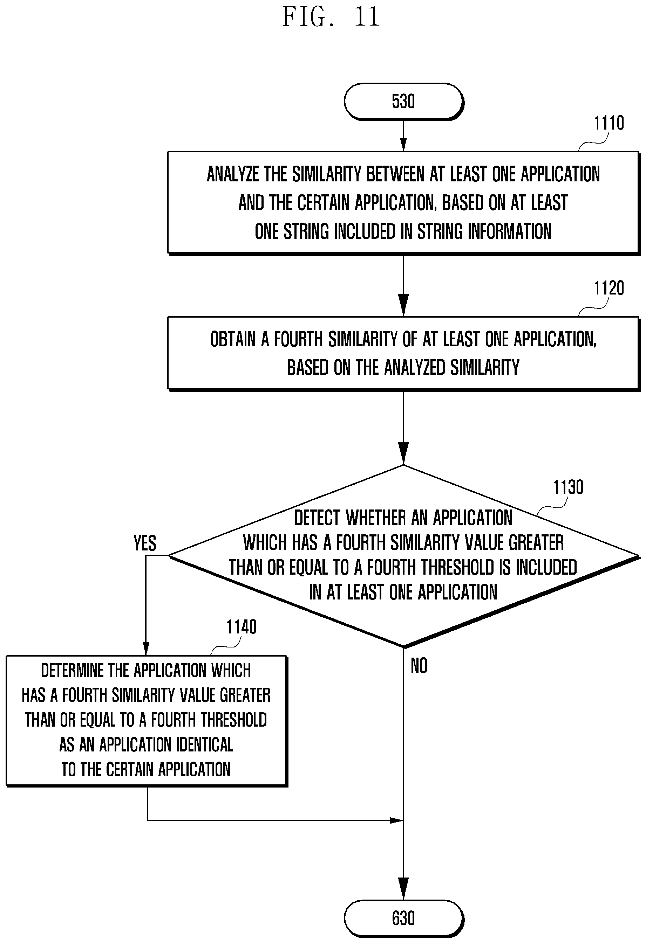

FIG. 11 is a flowchart of a method of analyzing similarity between pieces of information regarding strings according to an embodiment of the present disclosure.

Referring to FIG. 11, the string information similarity analyzing unit 450 is capable of analyzing the similarity between at least one application and the certain application, based on at least one string included in string information in step 1110.

In various embodiments of the present disclosure, the string information similarity analyzing unit 450 is capable of comparing all strings included in string information or at least part of the strings and analyzing the similarity. The string information similarity analyzing unit 450 is capable of displaying attributes of an application, e.g., title, developer, description, genre, etc., in the format of strings, and comparing the strings.

The string information similarity analyzing unit 450 is capable of standardizing language in string information where comparison is performed. For example, an identical application may be disturbed with string information in different languages depending on countries. Therefore, the string information similarity analyzing unit 450 ascertains language of strings of a certain application, and may change the language of the strings of at least one application to be compared with the certain application to the ascertained language. The string information similarity analyzing unit 450 sets language for standardization (e.g., English), and may change, if ascertaining an application of strings in language that differs from the language set for standardization, the ascertained language to English.

In various embodiments of the present disclosure, the method of analyzing the similarity of strings may be implemented, using an algorithm for comparing the similarity of voices, an algorithm for comparing the similarity of characters, a language model, etc. Since the method of analyzing the similarity of strings is well-known to those who are skilled in the art, its detailed description is omitted below.

The string information similarity analyzing unit 450 is capable of obtaining a fourth similarity of at least one application, based on the analyzed similarity in step 1120. Since the method of obtaining a fourth similarity value is similar to step 830, its detailed description is omitted below.

The string information similarity analyzing unit 450 is capable of detecting whether an application which has a fourth similarity value greater than or equal to a fourth threshold is included in at least one application in step 1130.

If the string information similarity analyzing unit 450 ascertains that an application which has a fourth similarity value greater than or equal to a fourth threshold is included in at least one application in step 1130, it proceeds with step 1140.

The string information similarity analyzing unit 450 is capable of determining the application which has a fourth similarity value greater than or equal to a fourth threshold as an application identical to the certain application in step 1140. Since step 1140 is similar to step 850, its detailed description is omitted below.

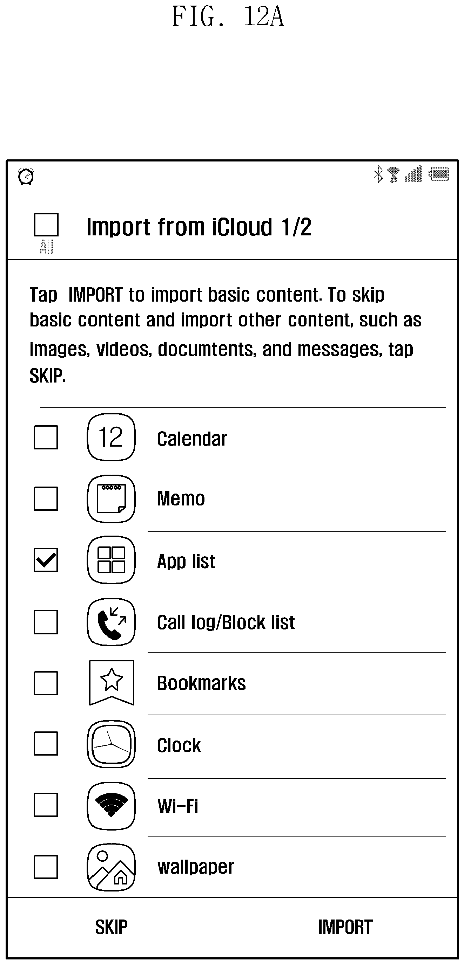

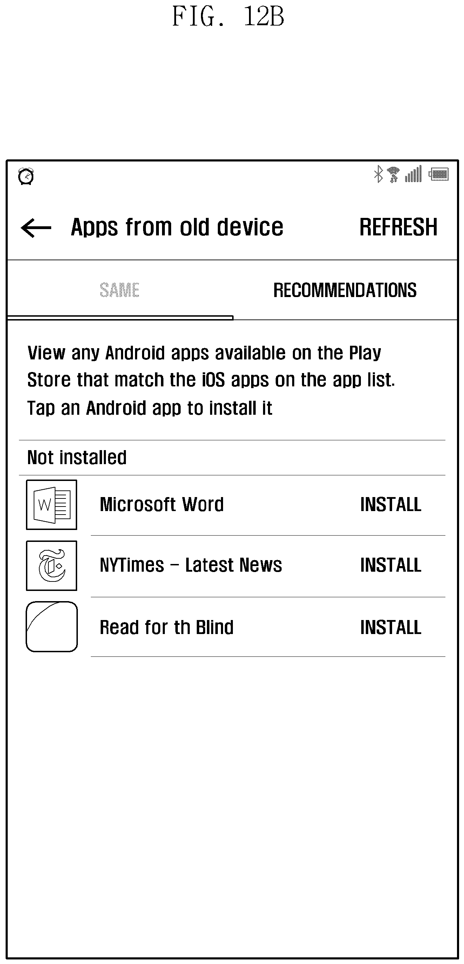

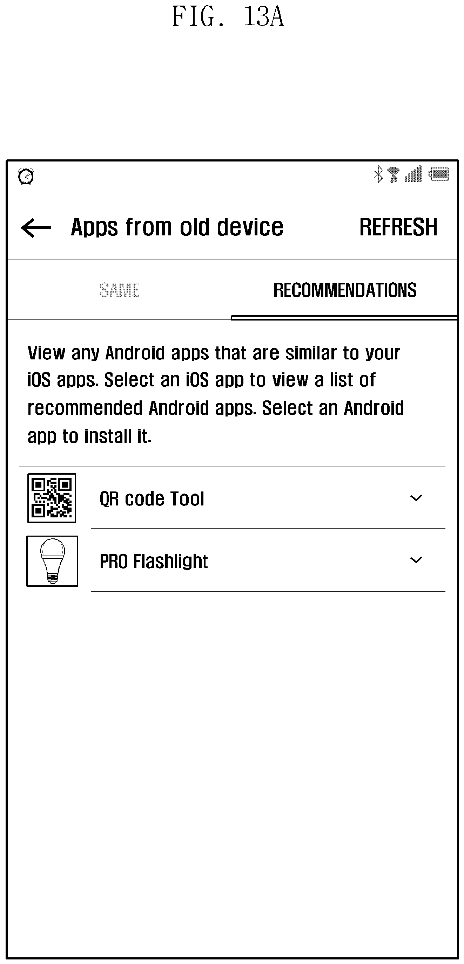

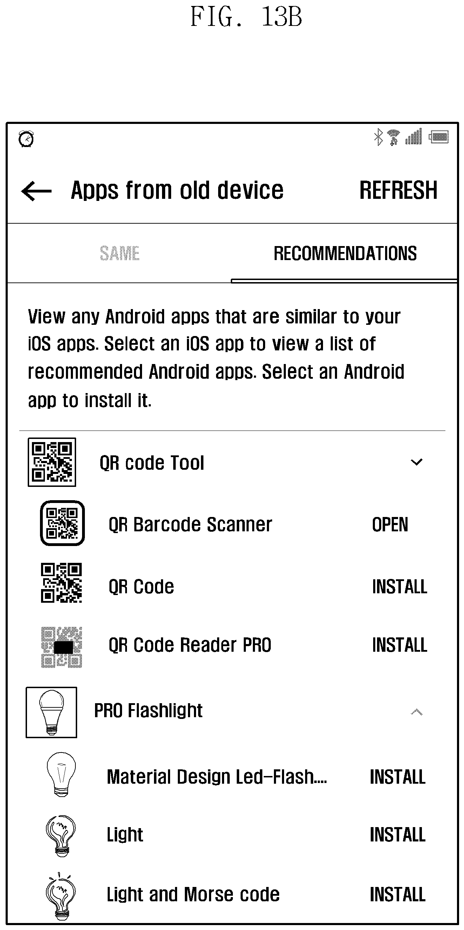

FIGs. 12A, 12B, 13A and 13B are diagrams of user interfaces according to various embodiments of the present disclosure.

Referring to FIG. 12A, the electronic device displays a user interface for determining whether there are applications which are at least similar to applications which are installed on a source OS (e.g., iOS®) and are implemented on a target OS (e.g., Android®). For example, if a user checks "App list" and presses an "IMPORT" button, the electronic device 101 is capable of receiving an input command for detecting applications at least similar to applications which are installed on a source OS (e.g., iOS®), and implemented on a target OS (e.g., Android®).

Referring to FIG. 12B, the electronic device displays a user interface for displaying applications determined to be identical to applications which are installed on a source OS (e.g., iOS®) and are implemented on a target OS (e.g., Android®). For example, the electronic device may display a user interface asking whether to install applications which are determined to be identical to applications among the applications installed on a source OS (e.g., iOS®), but not to be installed on a target OS (e.g., Android®).

Referring to FIG. 13A, the electronic device displays a user interface asking whether to ascertain applications similar to applications which are implemented on a target OS (e.g., Android®) and are installed on a source OS (e.g., iOS®). For example, if the electronic device ascertains that it has not discovered an identical application but determined an application as a similar application, it is capable of displaying user interface asking whether the user ascertains the application. In the embodiment of the present disclosure shown in FIG. 13A, if the user presses the down arrow button located at the right of an application (installed on a source OS) to be ascertained, the electronic device is capable of displaying similar applications.

Referring to FIG. 13B, if an input for displaying similar applications is applied to the electronic device in response to the request shown in FIG. 13A, the electronic device displays a user interface showing applications determined to be similar to applications (installed on a source OS) to be ascertained. For example, the electronic device may recommend three applications each time, which are determined to be most similar to "QR code Tool" and "PRO Flashlight" installed on a source OS. The number of recommended applications may vary according to the settings.

According to various embodiments of the present disclosure, a method of detecting similar applications is configured to include receiving an input command for detecting an application which is implemented on a certain OS and is at least similar to a certain application; collecting detailed information regarding the certain application; searching whether an application at least similar to the certain application exists, based on the collected detailed information; and displaying the search result in a preset mode.

According to various embodiments of the present disclosure, the operation of searching whether an application at least similar to the certain application exists includes comparing at least one of the following: a unique ID, an icon image and string information of at least one application implemented on the certain OS with at least one of the following: a unique ID, an icon image and string information of the certain application, and analyzing the comparison result; obtaining a first similarity value of each of at least one application, based on the comparison and analysis result; comparing the obtained first similarity value with a first threshold and a second threshold; and classifying at least one application, based on the comparison result.

According to various embodiments of the present disclosure, the operation of comparing and analyzing a unique ID includes determining whether an application whose unique ID is identical to that of the certain application is included in at least one application; and determining, if ascertaining that an application whose unique ID is identical to that of the certain application is included in at least one application, the application whose unique ID is identical to that of the certain application as an application identical to the certain application.

According to various embodiments of the present disclosure, the method further includes fragmenting, if ascertaining that an application whose unique ID is identical to that of the certain application is not included in at least one application, a unique ID of the certain application and a unique ID of at least one application into strings according to a delimiter; analyzing the similarity between at least one application and the certain application, based on the fragmented strings; and obtaining a second similarity value of each of at least one application, based on the analyzed similarity.

According to various embodiments of the present disclosure, the process of comparing and analyzing an icon image includes standardizing an icon image for a certain application; analyzing the similarity between at least one application and the certain application, based on the standardized icon image; and obtaining a third similarity value of each of at least one application, based on the analyzed similarity.

According to various embodiments of the present disclosure, the method further includes determining whether an application that has a third similarity value greater than or equal to a third threshold is included in at least one application; and determining, if ascertaining that an application that has a third similarity value greater than or equal to a third threshold is included in at least one application, the application that has a third similarity value greater than or equal to a third threshold as an application identical to the certain application.

According to various embodiments of the present disclosure, the process of standardizing an icon image for a certain application includes modifying the icon image for a certain application into a standardized icon image so that they are identical to each other in shape and size; and filling the background of an icon image after the modification with the background color of an icon image before the modification.

According to various embodiments of the present disclosure, the process of comparing and analyzing string information includes analyzing the similarity between at least one application and the certain application, based on at least one string included in string information; and obtaining a fourth similarity value of each of at least one application, based on the analyzed similarity.

According to various embodiments of the present disclosure, the method further includes determining whether an application that has a fourth similarity value greater than or equal to a fourth threshold is included in at least one application; and determining, if ascertaining that an application that has a fourth similarity value greater than or equal to a fourth threshold is included in at least one application, the application that has a fourth similarity value greater than or equal to a fourth threshold as an application identical to the certain application.

According to various embodiments of the present disclosure, the process of receiving an input command includes creating an in input command if the registration of a new user is detected or an account of the identical user registered in another OS is discovered.

According to various embodiments of the present disclosure, an electronic device is configured to include a communication module for communicating with one or more of the other electronic devices; a display for providing a user interface; a memory for storing instructions; and a processor electrically connected to the communication module, the display and the memory. The memory stores instructions that enable the processor to receive an input command for detecting an application which is implemented on a certain OS and is at least similar to a certain application; collect detailed information regarding the certain application; search whether an application at least similar to the certain application exists, based on the collected detailed information; and control the display to display the search result in a preset mode.

According to various embodiments of the present disclosure, the memory stores instructions enabling the processor to compare at least one of the following: a unique ID, an icon image and string information of at least one application implemented on the certain OS with at least one of the following: a unique ID, an icon image and string information of the certain application, and analyze the comparison result; obtain a first similarity value of each of at least one application, based on the comparison and analysis result; compare the obtained first similarity value with a first threshold and a second threshold; and classify at least one application, based on the comparison result.

According to various embodiments of the present disclosure, the memory stores instructions enabling the processor to determine whether an application whose unique ID is identical to that of the certain application is included in at least one application; and determine, if ascertaining that an application whose unique ID is identical to that of the certain application is included in at least one application, the application whose unique ID is identical to that of the certain application as an application identical to the certain application.

According to various embodiments of the present disclosure, the memory stores instructions enabling the processor to fragment, if ascertaining that an application whose unique ID is identical to that of the certain application is not included in at least one application, a unique ID of the certain application and a unique ID of at least one application into strings according to a delimiter; analyze the similarity between at least one application and the certain application, based on the fragmented strings; and obtain a second similarity value of each of at least one application, based on the analyzed similarity.

According to various embodiments of the present disclosure, the memory stores instructions enabling the processor to standardize an icon image for a certain application; analyze the similarity between at least one application and the certain application, based on the standardized icon image; and obtain a third similarity value of each of at least one application, based on the analyzed similarity.

According to various embodiments of the present disclosure, the memory stores instructions enabling the processor to determine whether an application that has a third similarity value greater than or equal to a third threshold is included in at least one application; and determine, if ascertaining that an application that has a third similarity value greater than or equal to a third threshold is included in at least one application, the application that has a third similarity value greater than or equal to a third threshold as an application identical to the certain application.

According to various embodiments of the present disclosure, the memory stores instructions enabling the processor to modify the icon image for a certain application into a standardized icon image so that they are identical to each other in shape and size; and fill the background of an icon image after the modification with the background color of an icon image before the modification.

According to various embodiments of the present disclosure, the memory stores instructions enabling the processor to analyze the similarity between at least one application and the certain application, based on at least one string included in string information; and obtain a fourth similarity value of each of at least one application, based on the analyzed similarity.

According to various embodiments of the present disclosure, the memory stores instructions enabling the processor to determine whether an application that has a fourth similarity value greater than or equal to a fourth threshold is included in at least one application; and determine, if ascertaining that an application that has a fourth similarity value greater than or equal to a fourth threshold is included in at least one application, the application that has a fourth similarity value greater than or equal to a fourth threshold as an application identical to the certain application.

According to various embodiments of the present disclosure, a system for detecting similar applications is configured to include an electronic device; and a server. The electronic device receives an input command for detecting an application which is implemented on a certain OS and is at least similar to a certain application; transmits the input command to the server; receives a search result from the server; and displays the search result in a preset mode. The server receives the input command from the electronic device; collects detailed information regarding the certain application; searches whether an application at least similar to the certain application exists, based on the collected detailed information; and transmits the search result to the electronic device.

Various embodiments of the present disclosure are capable of detecting identical or similar applications between different OSs, thereby securing the compatibility between different OSs. For example, various embodiments of the present disclosure are capable of supporting the smooth/flexible change from one OS to a different OS.
Various embodiments of the present disclosure are capable of easily determining whether an application is forged or plagiarized without permission by the detection of similar applications, thereby protecting application developers' rights.

The embodiments of the present disclosure are merely provided to assist in a comprehensive understanding of the present disclosure and are not suggestive of limitation. Therefore, it should be understood that many variations and modifications of the present disclosure described herein may fall within the scope of the present disclosure as defined by the appended claims and their equivalents.

## Claims

1. A method of detecting similar applications, comprising:
receiving (510) a request for detecting a second application which is implemented on a second operating system and is at least similar to a first application implemented on a first operating system;
collecting detailed information including a first icon image regarding the first application (530);
comparing (610) a second icon image of at least one application implemented on the second operating system to the first icon image of the first application by calculating a distance (1050) between pixels with respect to a center point (1040) of a circle, applying different weights for the similarity depending on the distance, forming a matrix including distances (1050) between pixels and the center point (1040) and calculating the determinant of the matrix;
analyzing the result of comparing the second icon image of the at least one application implemented on the second operating system to the first icon image of the first application;
obtaining (630) a first similarity value of the at least one application implemented on the second operating system, based on the comparison and analysis results;
comparing (650) the obtained first similarity value of the at least one application implemented on the second operating system to a first threshold and a second threshold;
determining (670) that the second application is identical to the first application, if the obtained first similarity value is greater than or equal to the first threshold, or
determining (670) that the second application is similar to the first application, if the obtained first similarity value is less than the first threshold and greater than or equal to the second threshold; and
displaying (570) the determined second application.

2. The method of claim 1, wherein obtaining the first similarity value is further comprise:
comparing at least one of a unique identification, ID, and string information of the at least one application to at least one of a unique ID, and string information of the first application, and
analyzing a result of comparing the at least one of the unique ID and the string information of the at least one application to the at least one of the unique ID and the string information of the first application.

3. The method of claim 1, wherein comparing and analyzing the icon image comprises standardizing the icon image for the first application;
analyzing similarity between the at least one application and the first application, based on the standardized icon image; and
obtaining a second similarity value of the at least one application, based on the analyzed similarity between the at least one application and the first application.

4. The method of claim 3, further comprising:
determining whether an application that has the second similarity value greater than or equal to a third threshold is included in the at least one application; and
if it is determined that the application having the second similarity value greater than or equal to the third threshold is included in the at least one application, determining that the application, that has the second similarity value greater than or equal to the third threshold, is identical to the first application.

5. The method of claim 3, wherein standardizing the icon image for the first application comprises:
modifying the icon image for the first application into a standardized icon image so that the icon image for the first application is identical to the standardized icon image in shape and size; and
filling a background of the icon image after the modification with a background color of the icon image before the modification.

6. The method of claim 1, wherein the request is created according that a registration of a user is detected or an account of the user registered in another operating system is discovered.

7. An electronic device, comprising:
a communication module (220) configured to communicate with one or more other electronic devices;
a display (260) configured to provide a user interface;
a memory (230) configured to store instructions; and
a processor (210) electrically connected to the communication module, the display and the memory,
wherein the processor is further configured to:
receive a request for detecting a second application which is implemented on a second operating system and is at least similar to a first application implemented on a first operating system,
collect detailed information including a first icon image regarding the first application,
compare a second icon image of at least one application implemented on the second operating system to the first icon image of the first application by calculating a distance (1050) between pixels with respect to a center point (1040) of a circle, applying different weights for the similarity depending on the distance, forming a matrix including distances (1050) between pixels and the center point (1040) and calculating the determinant of the matrix;
analyzing the result of comparing the second icon image of the at least one application implemented on the second operating system to the first icon image of the first application;
obtaining a first similarity value of the at least one application implemented on the second operating system, based on the comparison and analysis results;
compare the obtained first similarity value of the at least one application implemented on the second operating system to a first threshold and a second threshold;
determine (670) that the second application is identical to the first application, if the obtained first similarity value is greater than or equal to the first threshold, or
determine (670) that the second application is similar to the first application, if the obtained first similarity value is less than the first threshold and greater than or equal to the second threshold; and
control the display to display the determined second application.

8. The electronic device of claim 7, wherein the processor is further configured to:
compare at least one of a unique identification, ID, and string information of the at least one application to at least one of a unique ID, and string information of the first application, and
analyze a result of comparing the at least one of the unique ID and the string information of the at least one application implemented on the second operating system to the at least one of the unique ID and the string information of the first application.

9. The electronic device of claim 8, wherein the processor is further configured to:
determine whether an application whose unique ID is identical to that of the certain application is included in the at least one application implemented on the second operating system; and, if it is determined that an application whose unique ID is identical to that of the first application is included in the at least one application implemented on the second operating system, determine that the application, whose unique ID is identical to that of the first application, is identical to the first application.

10. The electronic device of claim 9, wherein the processor is further configured to:
fragment, if the unique ID of the at least one application implemented on the second operating system is not identical to that of the first application, the unique ID of the first application and the unique ID of the at least one application implemented on the second operating system into strings according to a delimiter;
analyze similarity between the at least one application implemented on the second operating system and the first application, based on the fragmented strings; and
obtain a second similarity value of the at least one application implemented on the second operating system, based on the analyzed similarity.

11. The electronic device of claim 8, wherein the processor is further configured to:
standardize an icon image for the first application;
analyze similarity between the at least one application implemented on the second operating system and the first application, based on the standardized icon image; and
obtain a second similarity value of the at least one application implemented on the second operating system, based on the analyzed similarity between the at least one application implemented on the second operating system and the first application.

12. The electronic device of claim 11, wherein the memory is further configured to store instructions that enable the processor to:
determine whether an application that has a second similarity value greater than or equal to a third threshold is included in the at least one application implemented on the second operating system; and
if it is determined that the application that has the second similarity value greater than or equal to the third threshold is included in the at least one application implemented on the second operating system, determine the application, that has the second similarity value greater than or equal to the third threshold, is identical to the first application.

13. The electronic device of claim 11, wherein the processor is configured to:
modify the icon image for the first application into a standardized icon image so that the icon image for the first application is identical to the standardized icon image in shape and size; and
fill a background of the icon image after the modification with a background color of the icon image before the modification.

14. The electronic device of claim 8, wherein the processor is further configured to:
analyze similarity between the at least one application and the first application, based on at least one string included in the string information; and
obtain a fourth similarity value of the at least one application, based on the analyzed similarity.

15. The electronic device of claim 14, wherein the processor is further configured to:
determine whether an application that has the fourth similarity value greater than or equal to a fourth threshold is included in the at least one application implemented on the second operating system; and
if it is determined that the application that has the fourth similarity value greater than or equal to the fourth threshold is included in the at least one application implemented on the second operating system, determine that the application, that has the fourth similarity value greater than or equal to the fourth threshold, is identical to the first application.

## Patentansprüche

1. Verfahren zum Erfassen ähnlicher Anwendungen, das Folgendes umfasst:
Empfangen (510) einer Anforderung zum Erfassen einer zweiten Anwendung, die auf einem zweiten Betriebssystem implementiert wird und mindestens einer ersten Anwendung ähnlich ist, die auf einem ersten Betriebssystem implementiert wird;
Sammeln ausführlicher Informationen einschließlich eines ersten Iconbildes bezüglich der ersten Anwendung (530);
Vergleichen (610) eines zweiten Iconbildes von mindestens einer Anwendung, die auf dem zweiten Betriebssystem implementiert wird, mit dem ersten Iconbild der ersten Anwendung durch Berechnen einer Distanz (1050) zwischen Pixeln in Bezug auf einen Mittelpunkt (1040) eines Kreises, Anwenden verschiedener Gewichte für die Ähnlichkeit je nach der Distanz, Bilden einer Matrize einschließlich Entfernungen (1050) zwischen Pixeln und dem Mittelpunkt (1040) und Berechnen der Determinante der Matrix;
Analysieren des Vergleichens des zweiten Iconbildes der mindestens einen Anwendung, die auf dem zweiten Betriebssystem implementiert wird, mit dem ersten Iconbild der ersten Anwendung;
Erhalten (630) eines ersten Ähnlichkeitswertes der mindestens einen Anwendung, die auf dem zweiten Betriebssystem implementiert wird, basierend auf den Vergleichs- und Analyseergebnissen;
Vergleichen (650) des erhaltenen ersten Ähnlichkeitswertes der mindestens einen Anwendung, die auf dem zweiten Betriebssystem implementiert wird, mit einem ersten Schwellenwert und einem zweiten Schwellenwert;
Bestimmen (670), dass die zweite Anwendung mit der ersten Anwendung identisch ist, wenn der erhaltene erste Ähnlichkeitswert gleich oder größer als der erste Schwellenwert ist, oder
Bestimmen (670), dass die zweite Anwendung der ersten Anwendung ähnlich ist, wenn der erhaltene erste Ähnlichkeitswert kleiner als der erste Schwellenwert ist und gleich oder größer als der zweite Schwellenwert ist; und
Anzeigen (570) der ermittelten zweiten Anwendung.

2. Verfahren nach Anspruch 1, wobei das Erhalten des ersten Ähnlichkeitswertes ferner Folgendes umfasst: Vergleichen einer eindeutigen Kennung, ID, und/oder Zeichenfolgeinformationen der mindestens einen Anwendung mit einer eindeutigen Kennung, ID, und/oder Zeichenfolgeinformationen der ersten Anwendung, und
Analysieren eines Vergleichsergebnisses der eindeutigen ID, und/oder Zeichenfolgeinformationen der mindestens einen Anwendung mit der eindeutigen ID und/oder den Zeichenfolgeinformationen der ersten Anwendung.

3. Verfahren nach Anspruch 1, wobei das Vergleichen und Analysieren des Iconbildes Folgendes umfasst:
Standardisieren des Iconbildes für die erste Anwendung;
Analysieren der Ähnlichkeit zwischen der mindestens einen Anwendung und der ersten Anwendung, basierend auf dem standardisierten Iconbild; und
Erhalten eines zweiten Ähnlichkeitswertes der mindestens einen Anwendung, basierend auf der analysierten Ähnlichkeit zwischen der mindestens einen Anwendung und der ersten Anwendung.

4. Verfahren nach Anspruch 3, das des Weiteren Folgendes umfasst:
Bestimmen, ob eine Anwendung, deren zweiter Ähnlichkeitswert gleich oder größer als ein dritter Schwellenwert ist, in der mindestens einen Anwendung enthalten ist; und
wenn bestimmt wird, dass die Anwendung deren zweiter Ähnlichkeitswert gleich oder größer als der dritte Schwellenwert ist, in der mindestens einen Anwendung enthalten ist, Bestimmen, dass die Anwendung, deren zweiter Ähnlichkeitswert gleich oder größer als der dritte Schwellenwert ist, mit der ersten Anwendung identisch ist.

5. Verfahren nach Anspruch 3, wobei das Standardisieren des Iconbildes für die erste Anwendung Folgendes umfasst:
Ändern des Iconbildes für die erste Anwendung in ein standardisiertes Iconbild, so dass das Iconbild für die erste Anwendung mit dem standardisierten Iconbild in Form und Größe identisch ist; und
Ausfüllen eines Hintergrunds des Iconbildes nach der Änderung mit einer Hintergrundfarbe des Iconbildes vor der Änderung.

6. Verfahren nach Anspruch 1, wobei die Anforderung erstellt wird, wenn eine Registrierung eines Benutzers erfasst wird oder ein Konto eines Benutzers, der in einem anderen Betriebssystem registriert ist, entdeckt wird.

7. Elektronische Vorrichtung, die Folgendes umfasst:
ein Kommunikationsmodul (220), das konfiguriert ist, um mit einer oder mehreren anderen elektronischen Vorrichtungen zu kommunizieren;
ein Display (260), das konfiguriert ist, um eine Benutzeroberfläche bereitzustellen;
einen Speicher (230), der konfiguriert ist, um Anweisungen zu speichern; und
einen Prozessor (210), der mit dem Kommunikationsmodul, dem Display und dem Speicher elektrisch verbunden ist,
wobei der Prozessor des Weiteren konfiguriert ist zum:
Empfangen einer Anforderung zum Erfassen einer zweiten Anwendung, die auf einem zweiten Betriebssystem implementiert wird und einer ersten Anwendung zumindest ähnlich ist, die auf einem ersten Betriebssystem implementiert wird,
Sammeln von ausführlichen Informationen einschließlich eines ersten Iconbildes bezüglich der ersten Anwendung,
Vergleichen eines zweiten Iconbildes von mindestens einer Anwendung, die auf dem zweiten Betriebssystem implementiert wird, mit dem ersten Iconbild der ersten Anwendung durch Berechnen einer Distanz (1050) zwischen Pixeln in Bezug auf einen Mittelpunkt (1040) eines Kreises, Anwenden verschiedener Gewichte für die Ähnlichkeit je nach der Distanz, Bilden einer Matrix einschließlich Entfernungen (1050) zwischen Pixeln und dem Mittelpunkt (1040) und Berechnen der Determinante der Matrix;
Analysieren des Vergleichsergebnisses des zweiten Iconbildes der mindestens einen Anwendung, die auf dem zweiten Betriebssystem implementiert wird, mit dem ersten Iconbild der ersten Anwendung;
Erhalten eines ersten Ähnlichkeitswertes der mindestens einen Anwendung, die auf dem zweiten Betriebssystem implementiert wird, basierend auf den Vergleichs- und Analyseergebnissen;
Vergleichen des erhaltenen ersten Ähnlichkeitswertes der mindestens einen Anwendung, die auf dem zweiten Betriebssystem implementiert wird, mit einem ersten Schwellenwert und einem zweiten Schwellenwert;
Bestimmen (670), dass die zweite Anwendung mit der ersten Anwendung identisch ist, wenn der erhaltene erste Ähnlichkeitswert gleich oder größer als der erste Schwellenwert ist, oder
Bestimmen (670), dass die zweite Anwendung der ersten Anwendung ähnlich ist, wenn der erhaltene erste Ähnlichkeitswert kleiner als der erste Schwellenwert ist und gleich oder größer als der zweite Schwellenwert; und
Steuern des Displays, so dass die ermittelte zweite Anwendung angezeigt wird.

8. Elektronische Vorrichtung nach Anspruch 7, wobei der Prozessor des Weiteren konfiguriert ist zum:
Vergleichen einer eindeutigen Kennung, ID, und/oder Zeichenfolgeinformationen der mindestens einen Anwendung mit einer eindeutigen ID, und/oder Zeichenfolgeinformationen der ersten Anwendung, und
Analysieren eines Vergleichsergebnisses der eindeutigen ID und/oder Zeichenfolgeinformationen der mindestens einen Anwendung, die auf dem zweiten Betriebssystem implementiert wird, mit der eindeutigen ID und/oder den Zeichenfolgeinformationen der ersten Anwendung.

9. Elektronische Vorrichtung nach Anspruch 8, wobei der Prozessor des Weiteren konfiguriert ist zum:
Bestimmen, ob eine Anwendung, deren eindeutige ID mit derjenigen der bestimmten Anwendung identisch ist, in der mindestens einen Anwendung enthalten ist, die auf dem zweiten Betriebssystem implementiert wird; und, wenn bestimmt wird, dass eine Anwendung, deren eindeutige ID mit derjenigen der bestimmten Anwendung identisch ist, in der mindestens einen Anwendung enthalten ist, die auf dem zweiten Betriebssystem implementiert wird, Bestimmen, dass die Anwendung, deren eindeutige ID mit derjenigen der ersten Anwendung identisch ist, mit der ersten Anwendung identisch ist.

10. Elektronische Vorrichtung nach Anspruch 9, wobei der Prozessor des Weiteren konfiguriert ist zum:
Fragmentieren der eindeutigen ID der ersten Anwendung und der eindeutigen ID der mindestens einen Anwendung, die auf dem zweiten Betriebssystem implementiert wird, in Zeichenfolgen gemäß einem Trennzeichen, wenn die eindeutige ID der mindestens einen Anwendung, die auf dem zweiten Betriebssystem implementiert wird, nicht mit der der ersten Anwendung identisch ist;
Analysieren der Ähnlichkeit zwischen der mindestens einen Anwendung, die auf dem zweiten Betriebssystem implementiert wird, und der ersten Anwendung, basierend auf den fragmentierten Zeichenfolgen; und
Erhalten eines zweiten Ähnlichkeitswertes der mindestens einen Anwendung, die auf dem zweiten Betriebssystem implementiert wird, basierend auf der analysierten Ähnlichkeit.

11. Elektronische Vorrichtung nach Anspruch 8, wobei der Prozessor des Weiteren konfiguriert ist zum:
Standardisieren eines Iconbildes für die erste Anwendung;
Analysieren der Ähnlichkeit zwischen der mindestens eine Anwendung, die auf dem zweiten Betriebssystem implementiert wird, und der ersten Anwendung, basierend auf dem standardisierten Iconbild; und
Erhalten eines zweiten Ähnlichkeitswertes der mindestens einen Anwendung, die auf dem zweiten Betriebssystem implementiert wird, basierend auf der analysierten Ähnlichkeit zwischen der mindestens einen Anwendung, die auf dem zweiten Betriebssystem implementiert wird, und der ersten Anwendung.

12. Elektronische Vorrichtung nach Anspruch 11, wobei der Speicher des Weiteren konfiguriert ist, um Anweisungen zu speichern, die den Prozessor zu Folgendem ermöglichen:
Bestimmen, ob eine Anwendung, deren zweiter Ähnlichkeitswert gleich oder größer als ein dritter Schwellenwert ist, in der mindestens einen Anwendung enthalten ist, die auf dem zweiten Betriebssystem implementiert wird; und
wenn bestimmt wird, dass die Anwendung deren zweiter Ähnlichkeitswert gleich oder größer als der dritte Schwellenwert ist, in der mindestens einen Anwendung enthalten ist, die auf dem zweiten Betriebssystem implementiert wird, Bestimmen, dass die Anwendung, deren zweiter Ähnlichkeitswert gleich oder größer als der dritte Schwellenwert ist, mit der ersten Anwendung identisch ist.

13. Elektronische Vorrichtung nach Anspruch 11, wobei der Prozessor konfiguriert ist zum:
Ändern des Iconbildes für die erste Anwendung in ein standardisiertes Iconbild, so dass das Iconbild für die erste Anwendung mit dem standardisierten Iconbild in Form und Größe identisch ist; und
Ausfüllen eines Hintergrunds des Iconbildes nach der Änderung mit einer Hintergrundfarbe des Iconbildes vor der Änderung.

14. Elektronische Vorrichtung nach Anspruch 8, wobei der Prozessor des Weiteren konfiguriert ist zum:
Analysieren der Ähnlichkeit zwischen der mindestens einen Anwendung und der ersten Anwendung, basierend auf mindestens einer Zeichenfolge, die in den Zeichenfolgeinformationen enthalten ist; und
Erhalten eines vierten Ähnlichkeitswertes der mindestens einen Anwendung, basierend auf der analysierten Ähnlichkeit.

15. Elektronische Vorrichtung nach Anspruch 14, wobei der Prozessor des Weiteren konfiguriert ist zum:
Bestimmen, ob eine Anwendung, deren vierter Ähnlichkeitswert gleich oder größer als ein vierter Schwellenwert ist, in der mindestens einen Anwendung enthalten ist, die auf dem zweiten Betriebssystem implementiert wird; und
wenn bestimmt wird, dass die Anwendung deren vierter Ähnlichkeitswert gleich oder größer als der vierte Schwellenwert ist, die auf dem zweiten Betriebssystem implementiert wird, in der mindestens einen Anwendung enthalten ist, die auf dem zweiten Betriebssystem implementiert wird, Bestimmen, dass die Anwendung, deren vierter Ähnlichkeitswert gleich oder größer als der vierte Schwellenwert ist, mit der ersten Anwendung identisch ist.

## Revendications

1. Procédé de détection d'applications similaires, comprenant :
recevoir (510) une demande de détection d'une deuxième application qui est implémentée sur un deuxième système d'exploitation et est au moins similaire à une première application implémentée sur un premier système d'exploitation ;
collecter des informations détaillées comprenant une première image d'icône concernant la première application (530) ;
comparer (610) une deuxième image d'icône d'au moins une application implémentée sur le deuxième système d'exploitation à la première image d'icône de la première application en calculant une distance (1050) entre pixels par rapport à un point central (1040) d'un cercle, appliquer différents poids pour la similitude en fonction de la distance, former une matrice comprenant des distances (1050) entre les pixels et le point central (1040) et calculer le déterminant de la matrice ;
analyser le résultat de la comparaison de la deuxième image d'icône de ladite application implémentée sur le deuxième système d'exploitation à la première image d'icône de la première application ;
obtenir (630) une première valeur de similitude de ladite application mise en œuvre sur le deuxième système d'exploitation, sur la base des résultats de comparaison et d'analyse ;
comparer (650) la première valeur de similitude obtenue de ladite application implémentée sur le deuxième système d'exploitation à un premier seuil et à un deuxième seuil ;
déterminer (670) que la deuxième application est identique à la première application, si la première valeur de similitude obtenue est supérieure ou égale au premier seuil, ou
déterminer (670) que la deuxième application est similaire à la première application, si la première valeur de similitude obtenue est inférieure au premier seuil et supérieure ou égale au deuxième seuil ; et
afficher (570) la deuxième application déterminée.

2. Procédé selon la revendication 1, où l'obtention de la première valeur de similitude comprend en outre :
comparer au moins un élément parmi les suivants : une identification unique, ID, et des informations de chaîne de ladite application à au moins un élément parmi les suivants : une ID unique et des informations de chaîne de la première application, et
analyser un résultat de comparaison de ladite ID unique et des informations de chaîne de ladite application à ladite ID unique et aux informations de chaîne de la première application.

3. Procédé selon la revendication 1, où la comparaison et l'analyse de l'image d'icône comprennent la normalisation de l'image d'icône pour la première application ;
analyser la similitude entre ladite application et la première application, sur la base de l'image d'icône normalisée ; et
obtenir une deuxième valeur de similitude de ladite application, sur la base de la similitude analysée entre ladite application et la première application.

4. Procédé selon la revendication 3, comprenant en outre :
déterminer si une application qui a la deuxième valeur de similitude supérieure ou égale à un troisième seuil est incluse ou non dans ladite application ; et
s'il est déterminé que l'application ayant la deuxième valeur de similitude supérieure ou égale au troisième seuil est incluse dans ladite application, déterminer que l'application, qui a la deuxième valeur de similitude supérieure ou égale au troisième seuil, est identique à la première application.

5. Procédé selon la revendication 3, où la normalisation de l'image d'icône pour la première application comprend :
modifier l'image d'icône pour la première application en une image d'icône normalisée de sorte que l'image d'icône pour la première application soit identique à l'image d'icône normalisée en forme et en taille ; et
remplir un arrière-plan de l'image d'icône après la modification avec une couleur d'arrière-plan de l'image d'icône avant la modification.

6. Procédé selon la revendication 1, où la requête est créée selon qu'un enregistrement d'un utilisateur est détecté ou qu'un compte de l'utilisateur enregistré dans un autre système d'exploitation est découvert.

7. Dispositif électronique, comprenant :
un module de communication (220) configuré pour communiquer avec un ou plusieurs autres dispositifs électroniques ;
une unité d'affichage (260) configurée pour fournir une interface utilisateur ;
une mémoire (230) configurée pour stocker des instructions ; et
un processeur (210) connecté électriquement au module de communication, à l'unité d'affichage et à la mémoire,
où le processeur est en outre configuré pour :
recevoir une requête de détection d'une deuxième application qui est implémentée sur un deuxième système d'exploitation et est au moins similaire à une première application implémentée sur un premier système d'exploitation,
collecter des informations détaillées comprenant une première image d'icône concernant la première application,
comparer une deuxième image d'icône d'au moins une application implémentée sur le deuxième système d'exploitation à la première image d'icône de la première application en calculant une distance (1050) entre des pixels par rapport à un point central (1040) d'un cercle, en appliquant des poids différents pour la similitude en fonction de la distance, formant une matrice comprenant des distances (1050) entre pixels et le point central (1040) et calculer le déterminant de la matrice ;
analyser le résultat de la comparaison de la deuxième image d'icône de ladite application implémentée sur le deuxième système d'exploitation à la première image d'icône de la première application ;
obtenir une première valeur de similitude de ladite application implémentée sur le deuxième système d'exploitation, sur la base des résultats de comparaison et d'analyse ;
comparer la première valeur de similitude obtenue de ladite application implémentée sur le deuxième système d'exploitation à un premier seuil et à un deuxième seuil ;
déterminer (670) que la deuxième application est identique à la première application, si la première valeur de similitude obtenue est supérieure ou égale au premier seuil, ou
déterminer (670) que la deuxième application est similaire à la première application, si la première valeur de similitude obtenue est inférieure au premier seuil et supérieure ou égale au deuxième seuil ; et
commander l'unité d'affichage pour afficher la deuxième application déterminée.

8. Dispositif électronique selon la revendication 7, où le processeur est en outre configuré pour :
comparer au moins un élément parmi les suivants : une identification unique, ID, et des informations de chaîne de ladite application à au moins un élément parmi les suivants : une ID unique et des informations de chaîne de la première application, et
analyser un résultat de comparaison de ladite ID unique et des informations de chaîne de ladite application implémentée sur le deuxième système d'exploitation à ladite ID unique et aux informations de chaîne de la première application.

9. Dispositif électronique selon la revendication 8, où le processeur est en outre configuré pour :
déterminer si une application dont l'ID unique est identique à celle de la certaine application est incluse dans ladite application implémentée sur le deuxième système d'exploitation ; et, s'il est déterminé qu'une application dont l'ID unique est identique à celle de la première application est incluse dans ladite application implémentée sur le deuxième système d'exploitation, déterminer que l'application, dont l'ID unique est identique à celle de la première application, est identique à la première application.

10. Dispositif électronique selon la revendication 9, où le processeur est en outre configuré pour :
fragmenter, si l'ID unique de ladite application implémentée sur le deuxième système d'exploitation n'est pas identique à celle de la première application, l'ID unique de la première application et l'ID unique de ladite application implémentée sur le deuxième système d'exploitation en chaînes selon un délimiteur ;
analyser la similitude entre ladite application implémentée sur le deuxième système d'exploitation et la première application, sur la base des chaînes fragmentées ; et
obtenir une deuxième valeur de similitude de ladite application implémentée sur le deuxième système d'exploitation, sur la base de la similitude analysée.

11. Dispositif électronique selon la revendication 8, où le processeur est en outre configuré pour :
normaliser une image d'icône pour la première application ;
analyser la similitude entre ladite application implémentée sur le deuxième système d'exploitation et la première application, sur la base de l'image d'icône normalisée ; et
obtenir une deuxième valeur de similitude de ladite application implémentée sur le deuxième système d'exploitation, sur la base de la similitude analysée entre ladite application implémentée sur le deuxième système d'exploitation et la première application.

12. Dispositif électronique selon la revendication 11, où la mémoire est en outre configurée pour stocker des instructions qui permettent au processeur de :
déterminer si une application qui a une deuxième valeur de similitude supérieure ou égale à un troisième seuil est incluse dans ladite application implémentée sur le deuxième système d'exploitation ; et
s'il est déterminé que l'application qui a la deuxième valeur de similitude supérieure ou égale au troisième seuil est incluse dans ladite application implémentée sur le deuxième système d'exploitation, déterminer que l'application dont la deuxième valeur de similitude est supérieure ou égale au troisième seuil, est identique à la première application.

13. Dispositif électronique selon la revendication 11, où le processeur est configuré pour :
modifier l'image d'icône pour la première application en une image d'icône normalisée de sorte que l'image d'icône pour la première application soit identique à l'image d'icône normalisée en forme et en taille ; et
remplir un arrière-plan de l'image de l'icône après la modification avec une couleur d'arrière-plan de l'image de l'icône avant la modification.

14. Dispositif électronique selon la revendication 8, où le processeur est en outre configuré pour :
analyser la similitude entre ladite application et la première application, sur la base d'au moins une chaîne incluse dans les informations de chaîne ; et
obtenir une quatrième valeur de similitude de ladite application, sur la base de la similitude analysée.

15. Dispositif électronique selon la revendication 14, où le processeur est en outre configuré pour :
déterminer si une application qui a la quatrième valeur de similitude supérieure ou égale à un quatrième seuil est incluse dans ladite application implémentée sur le deuxième système d'exploitation ; et
s'il est déterminé que l'application qui a la quatrième valeur de similitude supérieure ou égale au quatrième seuil est incluse dans ladite application implémentée sur le deuxième système d'exploitation, déterminer que l'application, qui a la quatrième valeur de similitude supérieure ou égale au quatrième seuil, est identique à la première application.
